# EUROPEAN PATENT SPECIFICATION

(11) **EP 3 639 101 B1**
(45) Date of publication and mention of the grant of the patent: **07.06.2023**
(21) Application number: 18817796.8
(22) Date of filing: 13.06.2018
(51) Int. Cl.: G05D 1/00, G05D 1/02

(54) **INTERVENTION IN OPERATION OF A VEHICLE HAVING AUTONOMOUS DRIVING CAPABILITIES**
EINGRIFF IN DEN BETRIEB EINES FAHRZEUGS MIT FÄHIGKEITEN ZUM AUTONOMEN FAHREN
INTERVENTION DANS LE FONCTIONNEMENT D'UN VÉHICULE AYANT DES CAPACITÉS DE CONDUITE AUTONOME

(30) Priority: 16.06.2017 US 201715624780; 16.06.2017 US 201715624802; 16.06.2017 US 201715624819; 16.06.2017 US 201715624838; 16.06.2017 US 201715624839; 16.06.2017 US 201715624857
(43) Date of publication of application: 22.04.2020
(73) Proprietor: Motional AD LLC, Boston, MA 02210 (US)
(72) Inventor: LIU, Shih-Yuan, Cambridge, Massachusetts 02140 (US); RAVICHANDRAN, Harshavardhan, Singapore (CN); IAGNEMMA,Karl, Belmont, Massachusetts 02478 (US); CHANG, Hsun-Hsien, Massachusetts 02445 (US)
(74) Representative: Fish & Richardson P.C.
(86) International application number: PCT/US2018/037400
(87) International publication number: WO 2018/232032

(56) References cited:
- EP-A1- 2 762 988
- WO-A1-2012/154938
- WO-A1-2015/014116
- US-A1- 2010 234 993
- US-A1- 2010 256 835
- US-A1- 2010 256 835
- US-A1- 2014 066 132
- US-A1- 2016 139 594
- US-A1- 2016 139 594
- US-A1- 2017 168 485
- US-A1- 2017 168 485
- US-B1- 8 965 621
- US-B1- 8 965 621
- US-B1- 8 996 224
- US-B1- 8 996 224
- US-B1- 9 632 502
- US-B1- 9 646 428

## Description

### BACKGROUND

On some occasions, such as when a vehicle that has autonomous driving capabilities (an AV) is driving on a road and experiences an event such as system faults, extreme weather conditions, and temporary detours-it may be useful to have a remotely located person provide assistance.

### SUMMARY

The invention is defined in the appended claims. In some implementations, the technologies described in this document include a teleoperation system that interacts with an AV system to handle various types of events, some of which may induce risks (e.g., collisions, traffic jams and damages) or may prohibit or inhibit the AV that is part of the AV system from traveling along a planned trajectory. In some examples, to handle the events, the AV system may communicate with a teleoperation system where a teleoperator provides teleoperations to the AV system.

In some cases, the teleoperation system may comprise a client onboard the AV or associated with the AV system and a server remote to the AV or the AV system. In some cases, the client and the server are both onboard the AV. In some applications, the server and the client may be separated into two different computing devices; in some cases, they may be integrated into a single computing device.

In some implementations, a function or a step described as a part of a teleoperation client may be realized as a part of a teleoperation server. Similarly, a function or a step described as a part of a teleoperation server may be realized as a part of a teleoperation client. In some cases, a function or a step can be a part of a teleoperation server and a part of a teleoperation client.

In general, in one aspect, a method comprises: (a) determining that intervention in an operation of one or more autonomous driving capabilities of a vehicle is appropriate; (b) based on the determination, enabling a person to provide information for an intervention; and (c) causing the intervention in the operation of the one or more autonomous driving capabilities of the vehicle. Determining that intervention is appropriate may comprise receiving a request for intervention. Determining that intervention is appropriate may comprise receiving information about a status or environment of the vehicle or a related AV system. The status or the environment of the vehicle may comprise a functionality of a hardware component or software of the vehicle or the AV system.

In some implementations, the information about the status or the environment of the vehicle or the AV system may comprise a signal from a hardware component or software of the vehicle or the AV system. Determining that an intervention is appropriate may comprise analyzing the signal. Analyzing the signal may comprise detecting unexpected data or absence of expected data. Analyzing the signal may comprise evaluating a mismatch between a measured quantity and a model-estimated quantity for the hardware component or software. Analyzing the signal may comprise using pattern recognition to evaluate an abnormal pattern in the signal. The abnormal pattern may be learned by a machine learning algorithm. Analyzing the signal may comprise inferring a malfunction in the hardware component or the software. Analyzing the signal may comprise detecting an unknown object present in the environment of the vehicle. Analyzing the signal may comprise inferring an event that is or will be happening in the environment of the vehicle.

In some implementations, the request may comprise a request initiated by a remote operator. The request may comprise data associated with status or environment of a vehicle or a related AV system. The request may comprise one or more signals from one or more hardware components of the vehicle or a related AV system. The request may comprise one or more signals from one or more software processes of the vehicle.

According to the invention, the method comprises, before the teleoperation command is received, based on the determination, causing a fallback intervention in the operation of the one or more autonomous driving capabilities of the vehicle. The fallback intervention may comprise causing the vehicle or a related AV system to enter a fully autonomous driving mode, a semi-autonomous driving mode, or a fully manual driving mode. The fallback intervention may comprise causing the vehicle to operate at a reduced velocity. The fallback intervention may comprise identifying a safe-to-stop location. The fallback intervention may comprise generating a new trajectory to the safe-to-stop location. The fallback intervention may comprise invoking a backup hardware component or a backup software process. The fallback intervention may comprise evaluating functional hardware components or software processes required to operate the vehicle.

In some implementations, determining that intervention is appropriate may comprise evaluating one or more active events associated with the vehicle or a related AV system, or the environment of the vehicle. Evaluating one or more events may comprise merging two or more active events. Enabling the person to provide information for an intervention may comprise maintaining a queue based on one or more determinations that intervention is appropriate. Maintaining the queue may comprise prioritizing an intervention based on one or more of the following: a decision tree, a combinatorial optimization, a machine algorithm, and a past intervention. Enabling the person to provide information for an intervention may comprise allocating the person to provide the information based on availability of the person, and one or more of: (a) time, (b) knowledge of the vehicle, (c) knowledge of the environment of the vehicle, or (d) a language.

In some implementations, enabling the person to provide information for an intervention may comprise presenting an interactive interface to the person. Presenting an interactive interface may comprise presenting a field of view or a bird's-eye of a vision sensor of the vehicle. Presenting an interactive interface may comprise presenting current or past or both perception information. Presenting an interactive interface may comprise presenting current or past or both trajectories. Presenting an interactive interface may comprise presenting current or past or both motion planning information. Presenting an interactive interface may comprise presenting a system diagram of the vehicle, the system diagram comprising one or more hardware components, or one or more software processes, or both.

In some implementations, the information for the intervention may comprise a current location of the vehicle determined by the person. The intervention may comprise treating the current location identified by the person as prior knowledge and using an inference algorithm to update the current location. The intervention may be based on the person identifying a goal location of the vehicle. The intervention may comprise treating the goal location identified by the person as prior knowledge and using an inference algorithm to update the goal location.

In some implementations, the method may include an intervention comprising a trajectory to be found by the person. The intervention may comprise treating the trajectory identified by the person as prior knowledge and using an inference algorithm to update the trajectory. The intervention may comprise one or more trajectory sampling points identified by the person. The intervention may comprise inferring a trajectory or a trajectory segment based on the one or more trajectory sampling points. Inferring a trajectory or a trajectory segment may be based on one or more trajectory primitives. The intervention may comprise concatenating two trajectory segments. Concatenating two trajectory segments may comprise smoothing the trajectory segments and smoothing a speed profile across the trajectory segments. The intervention may comprise specifying one or more un-traversable road segments. The intervention may comprise setting a speed profile. The intervention may comprise treating the speed profile as prior knowledge and using an inference algorithm to update the speed profile.

In some implementations, the intervention may be based on inferring a speed profile by a learning algorithm. The intervention may be based on inferring a steering angle by a learning algorithm. The intervention may comprise enabling, editing or disabling a hardware component or a software process. The intervention may comprise enabling, editing or disabling a subcomponent of a hardware component or a processing step of a software process.

In some implementations, the method may include an intervention comprising overwriting a travel preference or a travel rule. In some implementations, the method may include an intervention comprising editing data, the data comprising one or more of the following: a map, sensor data in the vehicle or a related AV system, trajectory data in the vehicle or a related AV system, vision data in the vehicle or a related AV system, or any past data in the vehicle or a related AV system.

In some implementations, the method may include configuring the vehicle or a related AV system based on a command. Configuring the vehicle or the AV system based on a command may comprise treating the command as prior knowledge and using an inference algorithm to update the command. A command may comprise one or more of the following: a trajectory, a label, a process control, an annotation, and a machine instruction.

In general, in an aspect, a method comprises (a) receiving an intervention request regarding an operation of one or more autonomous driving capabilities of a vehicle; (b) causing a person to interact with the vehicle over a communication channel; and (c) issuing an intervention to configure the operation of the one or more autonomous driving capabilities of a vehicle.

In some implementations, the method may comprise receiving or generating or analyzing information about a status or environment of the vehicle. The information about the status or the environment of the vehicle may comprise a functionality of a hardware component or software of the vehicle. The information about the status or the environment of the vehicle may comprise a signal from a hardware component or software of the vehicle. The information about the status or the environment of the vehicle may comprise presence of unexpected data or absence of expected data. The information about the status or the environment of the vehicle may comprise a mismatch between a measured quantity and a model-estimated quantity for a hardware component or software of the vehicle.

In some implementations, analyzing the information may comprise using pattern recognition to evaluate an abnormal pattern in the information. The abnormal pattern may be learned by a machine learning algorithm. Analyzing the information may comprise inferring a malfunction in the hardware component or the software. Analyzing the information may comprise detecting an unknown object present in the environment of the vehicle. Analyzing the information may comprise inferring an event that is or will be happening in the environment of the vehicle.

In some implementations, the intervention request may comprise a request initiated by the person or a second person. The intervention request may comprise data associated with status or environment of a vehicle or a related AV system. The intervention request may comprise one or more signals from one or more hardware components of the vehicle or a related AV system. The intervention request may comprise one or more signals from one or more software processes of the vehicle.

In some implementations, determining that intervention is appropriate may comprise evaluating one or more active events associated with the vehicle or a related AV system, or the environment of the vehicle. Evaluating one or more events may comprise merging two or more active events.

In some implementations, the method may comprise maintaining a queue of one or more intervention requests. Maintaining the queue may comprise prioritizing an intervention based on one or more of the following: a decision tree, a combinatorial optimization, a machine algorithm, and a past intervention.

In some implementations, the method may comprise allocating the person to interact with the vehicle based on availability of the person, and one or more of: (a) time, (b) knowledge of the vehicle, (c) knowledge of the environment of the vehicle, or (d) a language.

In some implementations, the method may comprise presenting an interactive interface to the person. Presenting an interactive interface may comprise presenting a field of view or a bird's-eye of a vision sensor of the vehicle. Presenting an interactive interface may comprise presenting current or past, or both, perception information. Presenting an interactive interface may comprise presenting current or past, or both, trajectories. Presenting an interactive interface may comprise presenting current or past, or both, motion planning information. Presenting an interactive interface comprises presenting a system diagram of the vehicle, the system diagram comprising one or more hardware components, or one or more software processes, or both.

In some implementations, the method may include an intervention comprising a current location of the vehicle determined by the person; the intervention may comprise treating the current location identified by the person as prior knowledge and using an inference algorithm to update the current location. The intervention may comprise identifying a goal location for the vehicle; the intervention may comprise treating the goal location identified as prior knowledge and using an inference algorithm to update the goal location. The intervention may comprise a trajectory to be found by the person; the intervention may comprise treating the trajectory identified by the person as prior knowledge and using an inference algorithm to update the trajectory. The intervention may comprise one or more trajectory sampling points identified by the person; the intervention may comprise inferring a trajectory or a trajectory segment based on the one or more trajectory sampling points. Inferring a trajectory or a trajectory segment may be based on one or more trajectory primitives. The intervention may comprise concatenating two trajectory segments. Concatenating two trajectory segments may comprise smoothing the trajectory segments and smoothing a speed profile across the trajectory segments. In some implementations, the intervention may comprise specifying one or more un-traversable road segments.

In some implementations, the intervention may comprise setting a speed profile; the intervention may comprise treating the speed profile as prior knowledge and using an inference algorithm to update the speed profile. The intervention may be based on inferring a speed profile by a learning algorithm. The intervention may be based on inferring a steering angle by a learning algorithm. The intervention may comprise enabling, editing or disabling a hardware component or a software process. The intervention may comprise enabling, editing or disabling a subcomponent of a hardware component or a processing step of a software process.

In some implementations, the intervention may comprise overwriting a travel preference or a travel rule. The intervention may comprise editing data, the data comprising one or more of the following: a map, sensor data in the vehicle, trajectory data in the vehicle, vision data in the vehicle, or any past data in the vehicle. Configuring the operation of the one or more autonomous driving capabilities may comprise treating an intervention as prior knowledge and using an inference algorithm to update the intervention for a purpose of the configuration. An intervention may comprise one or more of the following: a trajectory, a label, a process control, an annotation, and a machine instruction.

In general, in an aspect, implementations include a vehicle with autonomous driving capabilities comprising, and the vehicle may comprise (a) steering, acceleration, and deceleration devices that respond to controlling signals from a driving control system to drive the vehicle autonomously on a road network; (b) a monitoring element on the vehicle that generates an intervention request for the vehicle to engage in an intervention with a person; and (c) a communication element that receives a command from the person to the driving control system for the steering, acceleration, and deceleration devices to cause the vehicle to maneuver to a goal location.

In some implementations, the vehicle may comprise a processor that receives information about a status or environment of the vehicle to determine that the intervention is appropriate. The status or the environment of the vehicle may comprise a functionality of a hardware component or software of the vehicle. The information about the status or the environment of the vehicle may comprise a signal from a hardware component or software of the vehicle.

In some implementations, the vehicle may include determining that intervention is appropriate by analyzing the signal. Analyzing the signal may comprise detecting unexpected data or absence of expected data. Analyzing the signal may comprise evaluating a mismatch between a measured quantity and a model-estimated quantity for the hardware component or software. Analyzing the signal may comprise using pattern recognition to evaluate an abnormal pattern in the signal. An abnormal pattern may be learned from a machine learning algorithm. Analyzing the signal may comprise inferring a malfunction in the hardware component or the software. Analyzing the signal may comprise detecting an unknown object present in the environment of the vehicle. Analyzing the signal may comprise inferring an event that is or will be happening in the environment of the vehicle.

In some implementations, the request may comprise a request initiated by a remote operator. The request may comprise data associated with status or environment of a vehicle. The request may comprise one or more signals from one or more hardware components of the vehicle. The request may comprise one or more signals from one or more software processes of the vehicle.

In some implementations, the vehicle may comprise a processor causing a fallback intervention in the driving control system. The fallback intervention may comprise causing the vehicle to enter a fully autonomous driving mode, a semi-autonomous driving mode, or a fully manual driving mode. The fallback intervention may comprise causing the vehicle to operate at a reduced velocity. The fallback intervention may comprise identifying a safe-to-stop location. The fallback intervention may comprise generating a new trajectory to the safe-to-stop location. The fallback intervention may comprise invoking a backup hardware component or a backup software process. The fallback intervention may comprise evaluating functional hardware components or software processes required to operate the vehicle.

In some implementations, the vehicle may comprise a processor evaluating one or more active events associated with the vehicle, or the environment of the vehicle. Evaluating one or more active events may comprise merging two or more active events.

In some implementations, the vehicle may comprise a processor enabling the person to provide information for an intervention comprises maintaining a queue based on one or more determinations that intervention is appropriate. Maintaining the queue may comprise prioritizing an intervention based on one or more of the following: a decision tree, a combinatorial optimization, a machine algorithm, and a past intervention. Enabling the person to provide information for an intervention may comprise allocating the person to provide the information based on availability of the person, and one or more of: (a) time, (b) knowledge of the vehicle, (c) knowledge of the environment of the vehicle, or (d) a language. Enabling the person to provide information for an intervention may comprise presenting an interactive interface to the person. Presenting an interactive interface may comprise presenting a field of view or a bird's-eye of a vision sensor of the vehicle. Presenting an interactive interface may comprise presenting current or past, or both, perception information. Presenting an interactive interface may comprise presenting current or past, or both, trajectories. Presenting an interactive interface may comprise presenting current or past, or both, motion planning information. Presenting an interactive interface may comprise presenting a system diagram of the vehicle, the system diagram comprising one or more hardware components, or one or more software processes, or both.

In some implementations, the intervention may comprise a current location of the vehicle determined by the person. The intervention may comprise treating the current location identified by the person as prior knowledge and using an inference algorithm to update the current location.

In some implementations, the intervention may be based on the person identifying a goal location of the vehicle. The intervention may comprise treating the goal location identified by the person as prior knowledge and using an inference algorithm to update the goal location.

In some implementations, the intervention may comprise a trajectory to be found by the person. The intervention may comprise treating the trajectory identified by the person as prior knowledge and using an inference algorithm to update the trajectory.

In some implementations, the intervention may comprise one or more trajectory sampling points identified by the person. The intervention may comprise inferring a trajectory or a trajectory segment based on the one or more trajectory sampling points. Inferring a trajectory or a trajectory segment may be based on one or more trajectory primitives. The intervention may comprise concatenating two trajectory segments. Concatenating two trajectory segments may comprise smoothing the trajectory segments and smoothing a speed profile across the trajectory segments.

In some implementations, an intervention may comprise specifying one or more un-traversable road segments. An intervention may comprise setting a speed profile. An intervention may comprise treating the speed profile as prior knowledge and using an inference algorithm to update the speed profile. An intervention may be based on inferring a speed profile by a learning algorithm. An intervention may be based on inferring a steering angle by a learning algorithm. An intervention may comprise enabling, editing or disabling a hardware component or a software process. An intervention may comprise enabling, editing or disabling a subcomponent of a hardware component or a processing step of a software process. An intervention may comprise overwriting a travel preference or a travel rule. An intervention may comprise editing data, the data comprising one or more of the following: map, sensor data, trajectory data, vision data, or any past data.

In some implementations, the vehicle may comprise a processor configuring the vehicle or a related AV system based on a command. Configuring the vehicle or the AV system based on a command may comprise treating the command as prior knowledge and using an inference algorithm to update the command. A command may comprise one or more of the following: a trajectory, a label, a process control, an annotation, and a machine instruction.

In another aspect, implementations include an apparatus comprising: (a) a processor configured to (1) receive an intervention request regarding operation of a vehicle and (2) extract motion information or perception information from the intervention request, and (b) a display configured to (1) display the motion information or the perception information and (2) allow a user to interact with operation of the vehicle.

In some implementations, an intervention request may comprise a request initiated by a remote operator. An intervention request may comprise data associated with status or environment of the vehicle or a related AV system. An intervention request may comprise one or more signals from one or more hardware components of the vehicle or a related AV system. An intervention request may comprise one or more signals from one or more software processes of the vehicle.

In some implementations, the display may be configured to present an interactive interface comprising a field of view or a bird's-eye of a vision sensor of the vehicle. The display may be configured to present an interactive interface comprising current or past or both perception information. The display may be configured to present an interactive interface comprising current or past or both trajectories. The display may be configured to present an interactive interface comprising current or past or both motion planning information. The display may be configured to present an interactive interface comprising a system diagram of the vehicle, the system diagram comprising one or more hardware components, or one or more software processes, or both.

In some implementations, the apparatus may include a processor that converts one or more interactions from the user into an intervention for the operation of the vehicle. One or more interactions may comprise a current location of the vehicle determined by the user; a processor may treat the current location identified by the user as prior knowledge and uses an inference algorithm to generate an updated current location as an intervention. One or more interactions may comprise a goal location of the vehicle identified by the user; a processor may treat the goal location as prior knowledge and uses an inference algorithm to generate an updated goal location as an intervention. One or more interactions may comprise a trajectory identified by the user; a processor may treat the trajectory as prior knowledge and uses an inference algorithm to generate an updated trajectory as an intervention. One or more interactions comprise one or more trajectory sampling points identified by the person; a processor may infer a trajectory or a trajectory segment based on the one or more trajectory sampling points. A processor may infer a trajectory or a trajectory segment based on one or more trajectory primitives. A processor may concatenate two trajectory segments. Concatenating two trajectory segments may comprise smoothing the trajectory segments and smoothing a speed profile across the trajectory segments. One or more interactions may comprise specifying one or more un-traversable road segments. One or more interactions may comprise setting a speed profile. A processor may treat the speed profile as prior knowledge and use an inference algorithm to generate an updated speed profile as an intervention. A processor may infer a speed profile by a learning algorithm, and the speed profiles may be included in the intervention. A processor may infer a steering angle by a learning algorithm, and the steering angle may be included in the intervention. One or more interactions or an intervention may comprise enabling, editing or disabling a hardware component or a software process. One or more interactions or an intervention comprises enabling, editing or disabling a subcomponent of a hardware component or a step of a software process. One or more interactions or an intervention may comprise overwriting a travel preference or a travel rule. One or more interactions or an intervention may comprise editing data, the data comprising one or more of the following: a map, sensor data in the vehicle or a related AV system, trajectory data in the vehicle or a related AV system, vision data in the vehicle or a related AV system, or any past data in the vehicle or a related AV system. An intervention may comprise one or more of the following: a trajectory, a label, a process control, an annotation, and a machine instruction.

In general, in an aspect, a method comprises: (a) causing a vehicle to drive in an autonomous mode on a road, the vehicle comprising one or more autonomous driving capabilities; (b) receiving an intervention regarding an operation of the one or more autonomous driving capabilities; and (c) analyzing the intervention and configuring one or more hardware components or one or more software processes of the vehicle.

In some implementations, an intervention may comprise a current location of the vehicle; analyzing the intervention may comprise treating the current location in the intervention as prior knowledge and using an inference algorithm to update the current location. An intervention may comprise a goal location; analyzing the intervention may comprise treating the goal location in the intervention as prior knowledge and using an inference algorithm to update the goal location. An intervention may comprise a trajectory; analyzing the intervention may comprise treating the trajectory in the intervention as prior knowledge and using an inference algorithm to update the trajectory. An intervention may comprise one or more trajectory sampling points; analyzing the intervention may comprise treating the one or more trajectory sampling points as prior knowledge and using an inference algorithm to update the one or more trajectory sampling points. Analyzing an intervention may comprise inferring a trajectory or a trajectory segment based on the one or more trajectory sampling points. Inferring a trajectory or a trajectory segment may be based on one or more trajectory primitives. Inferring a trajectory or a trajectory segment may comprise concatenating two trajectory segments. Concatenating two trajectory segments may comprise smoothing the trajectory segments and smoothing a speed profile across the trajectory segments. An intervention may comprise specifying one or more un-traversable road segments. An intervention may comprise inferring or setting a speed profile. Analyzing an intervention may comprise treating the speed profile as prior knowledge and using an inference algorithm to update the speed profile. Analyzing an intervention may comprise inferring a speed profile by a learning algorithm. Analyzing an intervention may comprise inferring a steering angle by a learning algorithm. Analyzing an intervention may comprise enabling, editing or disabling a hardware component or a software process. Analyzing an intervention may comprise enabling, editing or disabling a subcomponent of a hardware component or a processing step of a software process. An intervention may comprise overwriting a travel preference or a travel rule. An intervention may comprise editing data, the data comprising one or more of the following: a map, sensor data in the vehicle or a related AV system, trajectory data in the vehicle or a related AV system, vision data in the vehicle or a related AV system, or any past data in the vehicle or a related AV system.

In general, in an aspect, a method comprises: (a) receiving from a remote operator machine-readable instructions regarding an operation of a vehicle; and (b) configuring the vehicle to execute the machine-readable instructions. The vehicle may comprise one or more autonomous driving capabilities. Machine-readable instructions may represent one or more of the following: a current location, a goal location, one or more trajectories, one or more trajectory sampling points, one or more speed profiles, or one or more un-traversable road segments. Machine-readable instructions may comprise enabling, editing or disabling a hardware component or a software process. Machine-readable instructions may comprise enabling, editing or disabling a subcomponent of a hardware component or a processing step of a software process. Machine-readable instructions may comprise overwriting a travel preference or a travel rule. Machine-readable instructions may comprise editing data, the data comprising one or more of the following: a map, sensor data in the vehicle or a related AV system, trajectory data in the vehicle or a related AV system, vision data in the vehicle or a related AV system, or any past data in the vehicle or a related AV system.

These and other aspects, features, and implementations can be expressed as methods, apparatus, systems, components, program products, methods of doing business, means or steps for performing a function, and in other ways.

These and other aspects, features, and implementations will become apparent from the following descriptions, including the claims.

### BRIEF DESCRIPTION OF THE DRAWINGS

**FIG. 1** is a block diagram of an AV system.
**FIGs. 2A** and **2B** show examples of a teleoperation system.
**FIGs. 3A** and **3B** show examples of a teleoperation client.
**FIGs. 4A** and **4B** show examples of a teleoperation flowchart.
**FIG. 5** shows an example of a teleoperation server.
**FIGs. 6-12** show examples of teleoperation interfaces.

### DESCRIPTION

The term "autonomous driving capability" is used broadly to include, for example, any function, feature, or facility that can participate in the driving of an AV other than by a person manipulating a steering wheel, accelerator, brake, or other physical controller of the AV.

The term "teleoperation" is used broadly to include, for example, any instruction, guidance, command, request, order, directive, or other control of or interaction with an autonomous driving capability of an AV, sent to the AV or the AV system by a communication channel (e.g., wireless or wired). This document sometimes uses the term "teleoperation command" interchangeably with "teleoperation." Teleoperations are examples of interventions.

The term "teleoperator" is used broadly to include, for example, any person or any software process or hardware device or any combination of them that initiates, causes, or is otherwise the source of a teleoperation. A teleoperator may be local to the AV or AV system (e.g., occupying the AV, standing next to the AV, or one or more steps away from the AV), or remote from the AV or AV system (e.g., at least 1, 2, 3, 4, 5, 10, 20, 30, 40, 50, 100, 200, 300, 400, 500, 600, 700, 900, or 1000 meters away from the AV).

The term "teleoperation event" is used broadly to include, for example, any occurrence, act, circumstance, incident, or other situation for which a teleoperation would be appropriate, useful, desirable, or necessary.

The term "teleoperation request" is used broadly to include, for example, any communication from an AV or an AV system to a teleoperator or other part of a teleoperation system in connection with a teleoperation.

The term "tele-interact" or "tele-interaction" is used broadly to include, for example, any virtual interaction between a teleoperator and a hardware component or a software process of an AV or an AV system.

The term "fallback operation" is used broadly to include, for example, any fashion, form, or method of action, performance, or activity of an autonomous driving capability of an AV after a teleoperation request and before or while a corresponding teleoperation is received and executed by the AV system.

The term "trajectory" is used broadly to include, for example, any path or route from one place to another; for instance, a path from a pickup location to a drop off location.

The term "goal" or "goal position" is used broadly to include, for example, a place to be reached by an AV, including, for example, an interim drop off location, a final drop off location, or a destination, among others.

This document describes technologies applicable to any vehicles that have one or more autonomous driving capabilities including fully autonomous vehicles, highly autonomous vehicles, and conditionally autonomous vehicles, such as so-called Level 5, Level 4 and Level 3 vehicles, respectively (see SAE International's standard J3016: Taxonomy and Definitions for Terms Related to On-Road Motor Vehicle Automated Driving Systems, which is incorporated by reference in its entirety, for more details on the classification of levels of autonomy in vehicles). Vehicles with autonomous driving capabilities may attempt to control the steering or speed of the vehicles. The technologies descried in this document can be applied to partially autonomous vehicles and driver assisted vehicles, such as so called Level 2 and Level 1 vehicles (see SAE International's standard J3016: Taxonomy and Definitions for Terms Related to On-Road Motor Vehicle Automated Driving Systems). One or more of the Level 1, 2, 3, 4 and 5 vehicle systems may automate certain vehicle operations (e.g., steering, braking, and using maps) under certain driving conditions based on analysis of sensor inputs. The technologies described in this document can benefit vehicles in any levels, ranging from fully autonomous vehicles to human-operated vehicles.

### AV System

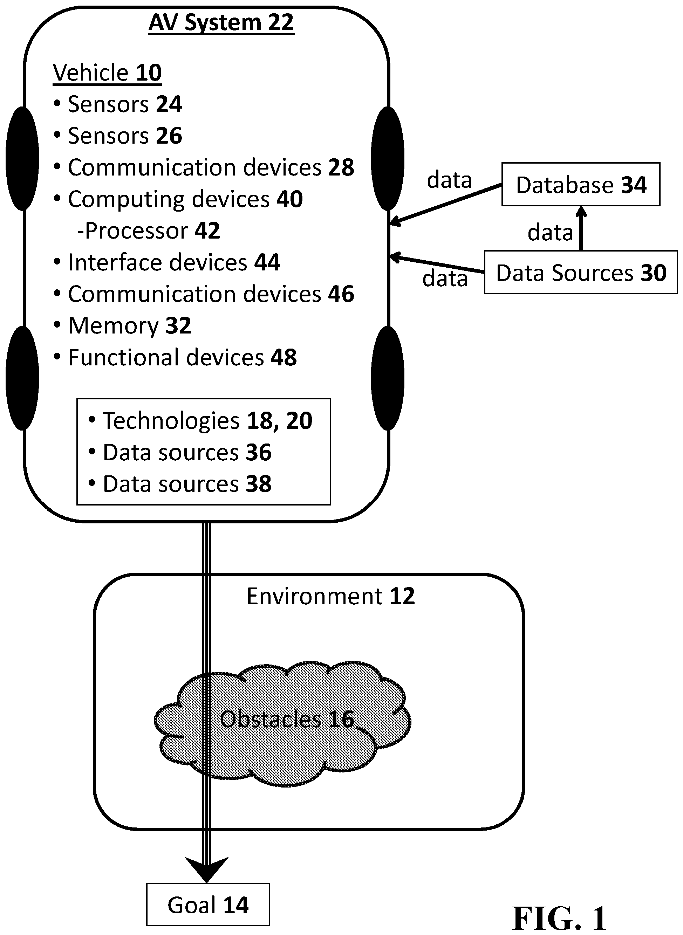

As shown in **FIG. 1**, a typical activity of an AV **10** is to safely and reliably drive autonomously or partially manually or both through an environment **12** to a goal location **14**, while avoiding vehicles, pedestrians, cyclists, and other obstacles **16** and obeying rules of the road (e.g., rules of operation or driving preferences). The features, functions, and facilities of an AV or an AV system that enable the AV to perform the autonomous driving often are referred to as autonomous driving capabilities.

The driving of an AV typically is supported by an array of technologies **18** and **20**, (e.g., hardware, software, and stored and real time data) that this document together (and with the AV **10**) refers to as an AV system **22**. In some implementations, one or some or all of the technologies are onboard the AV. In some cases, one or some or all of the technologies are at another location such as at a server (e.g., in a cloud computing infrastructure). Components of an AV system can include one or more or all of the following (among others).
1. Memory **32** for storing machine instructions and various types of data.
2. One or more sensors **24** for measuring or inferring or both properties of the AV's state and condition, such as the AV's position, linear and angular velocity and acceleration, and heading (i.e., orientation of the leading end of the AV). For example, such sensors can include, but are not limited to: GPS; inertial measurement units that measure both vehicle linear accelerations and angular rates; individual wheel speed sensors for measuring or estimating individual wheel slip ratios; individual wheel brake pressure or braking torque sensors; engine torque or individual wheel torque sensors; and steering wheel angle and angular rate sensors.
3. One or more sensors **26** for sensing or measuring properties of the AV's environment. For example, such sensors can include, but are not limited to: LIDAR; RADAR; monocular or stereo video cameras in the visible light, infrared and/or thermal spectra; ultrasonic sensors; time-of-flight (TOF) depth sensors; speed sensors; and temperature and rain sensors.
4. One or more devices **28** for communicating measured or inferred or both properties of other vehicles' states and conditions, such as positions, linear and angular velocities, linear and angular accelerations, and linear and angular headings. These devices include Vehicle-to-Vehicle (V2V) and Vehicle-to-Infrastructure (V2I) communication devices, and devices for wireless communications over point-to-point or ad-hoc networks or both. The devices can communicate across the electromagnetic spectrum (including radio and optical communications) or other media (e.g., acoustic communications).
5. One or more data sources **30** for providing historical, or real-time, or predictive information, or a combination of any two or more of them about the environment **12**, including, for example, traffic congestion updates and weather conditions. Such data may be stored on a memory storage unit **32** on the AV or transmitted to the AV via wireless communications from a remote database **34**.
6. One or more data sources **36** for providing digital road map data drawn from GIS databases, potentially including one or more of the following: high-precision maps of the roadway geometric properties; maps describing road network connectivity properties; maps describing roadway physical properties (such as the number of vehicular and cyclist traffic lanes, lane width, lane traffic directions, or lane marker types and locations, or combinations of them); and maps describing the spatial locations of road features such as crosswalks, traffic signs or other travel signals of various. Such data may be stored on a memory storage unit **32** on the AV, or transmitted to the AV by wireless communication from a remotely located database, or a combination of the two.
7. One or more data sources **38** for providing historical information about driving properties (e.g., typical speed and acceleration profiles) of vehicles that have previously traveled along local road sections at similar times of day. Such data may be stored on a memory storage unit **32** on the AV, or transmitted to the AV by wireless communication from a remotely located database **34**, or a combination of the two.
8. One or more computing devices **40** located on the AV for executing algorithms (e.g., processes **42**) for the on-line (that is, real-time on board) generation of control actions based on both real-time sensor data and prior information, allowing the AV to execute its autonomous driving capabilities.
9. One or more interface devices **44** (e.g., displays, mouses, track points, keyboards, touchscreens, speakers, biometric readers, and gesture readers) coupled to the computing devices **40** for providing information and alerts of various types to, and receiving input from, a user (e.g., an occupant or a remote user) of the AV. The coupling may be wireless or wired. Any two or more of the interface devices may be integrated into a single one.
10. One or more communication interfaces **46** (e.g., wired, wireless, WiMAX, Wi-Fi, Bluetooth, satellite, cellular, optical, near field, or radio, or combinations of them) for transmitting data from a remotely located database **34** to the AV, to transmit sensor data or data related to driving performance to a remotely located database **34**, and to transmit communications that relate to teleoperations.
11. Functional devices **48** of the AV that are instrumented to receive and act on commands for driving (e.g., steering, acceleration, deceleration, gear selection) and for auxiliary functions (e.g., turn indicator activation) from the computing devices **40**.

### Teleoperation System

A teleoperation system, which may be remote or local or a combination of them to the AV or AV system, can enable a teleoperator to interact with the AV system (e.g., providing commands, visualizing a driving condition, and investigating functionality of a hardware component or software process) via a communication channel. The interactions may assist the AV system to adequately respond to various events.

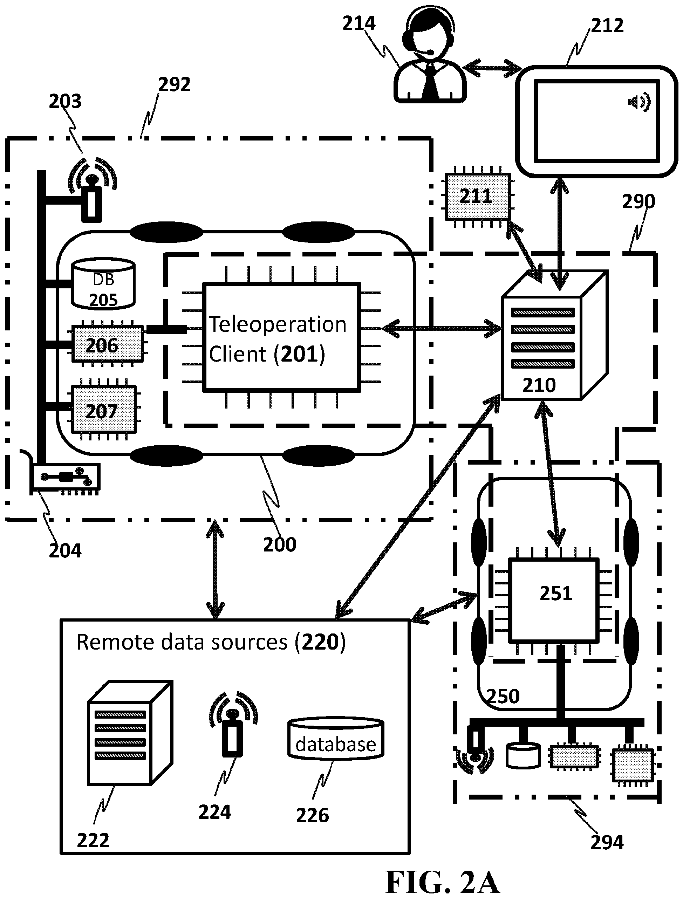

**FIG. 2A** illustrates exemplary architecture of a teleoperation system. A teleoperation system **290** may include the following elements (among others):
- A teleoperation client **201** (e.g., hardware, software, firmware, or a combination of two or more of them), typically installed on an AV **200** of an AV system **292**. The teleoperation client **201** may interact with components (e.g., sensors **203**, communication devices **204**, user interface devices, memory **206**, a controller **207**, or functional devices, or combinations of them) of the AV system **292**, for example, sending and receiving information and commands. The teleoperation client **201** can communicate over a communication interface **204** (that may be at least partly wireless) with a teleoperation server **210**.
- A teleoperation server **210**, may be located in the AV **200** or in a remote location, for example, at least 0.1, 1, 2, 3, 4, 5, 10, 20, 30, 40, 50, 100, 200, 300, 400, 500, 600, 700, 900, or 1000 meters away from the AV **200**. The teleoperation server **210** communicates with the teleoperation client **201** using the communication interface **204**. In some implementations, the teleoperation server **210** can communicate simultaneously with multiple teleoperation clients; for example, the teleoperation server **210** communicates with another teleoperation client **251** of another AV **250** that is part of another AV system **294**. The clients **201** and **251** may communicate with one or more data sources **220** (e.g., a central server **222**, a remote sensor **224**, and a remote database **226** or combinations of them) to collect data (e.g., road networks, maps, weather, and traffics) for implementing autonomous driving capabilities. The teleoperation server **210** may also communicate with the remote data sources **220** for teleoperations for the AV system **292** or **294** or both.
- A user interface **212** presented by the teleoperation server **210** for a human teleoperator **214** to engage in teleoperations for the AV system **200**. In some cases, the interface **212** may render to the teleoperator **214** what the AV system **200** has perceived or is perceiving. The rendering may be based on real sensor signals or based on simulations. In some implementations, the user interface **212** may be replaced by an automatic intervention process **211** that makes any decisions on behalf of the teleoperator **214**.

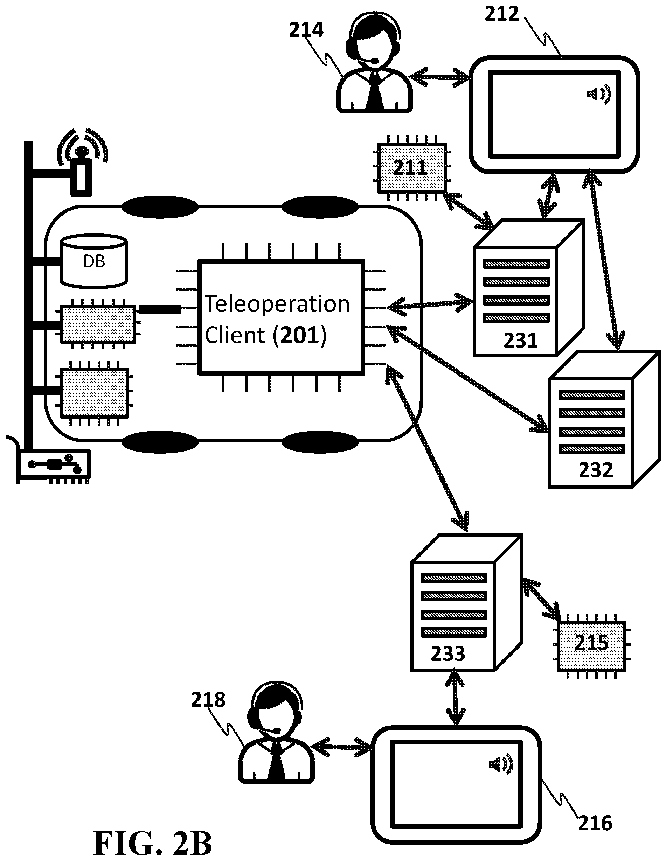

Referring to **FIG. 2B**, in some implementations, a teleoperation client **201** may communicate with two or more teleoperation servers **231** and **232**, where the servers send and aggregate various information for a single teleoperator **214** to conduct a teleoperation session on a user interface **212**. In some cases, a teleoperation client **201** may communicate with two or more teleoperation servers (e.g., **231** and **233**), which present individual user interfaces (e.g., **212** and **216**) to different teleoperators (e.g., **214** and **218**), allowing the two or more teleoperators (e.g., **214** and **218**) to jointly participate in a teleoperation session. In some cases, automatic processes **211** and **215** may automate teleoperation on behalf of the interfaces (e.g., **212** and **216**) and teleoperators (e.g., **214** and **218**).

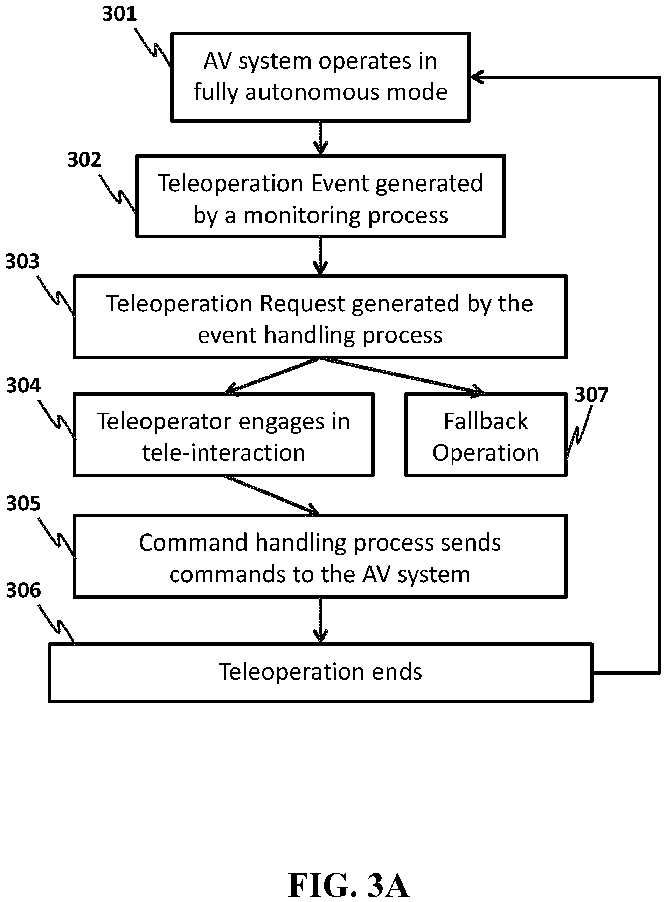

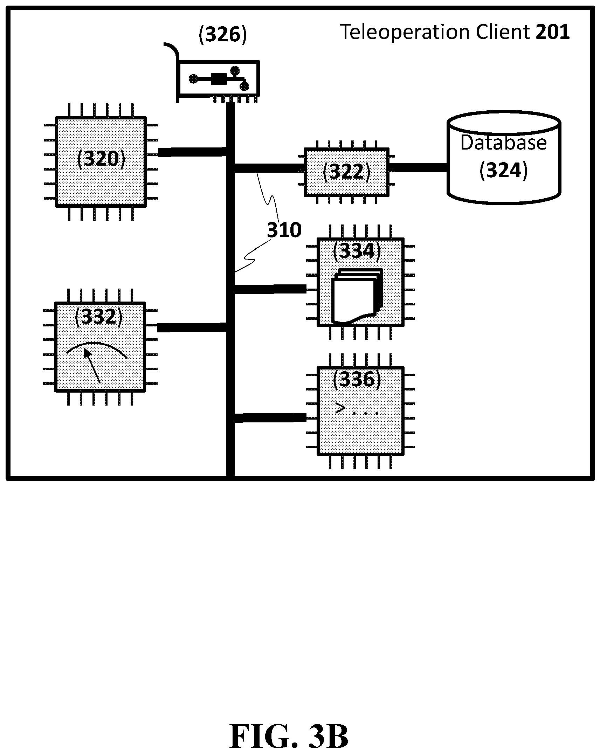

**FIG. 3A** shows an exemplary flow chart of a teleoperation system **290**. **FIG. 3B** shows an exemplary architecture of a teleoperation client **201**, which may be software loaded on memory **322** being executed by a processor **320**, or may be hardware comprising one or more of the following: a data bus **310**, a processor **320**, memory **322**, a database **324**, and a communication interface **326**. Referring **FIG. 3A**, in an initial condition **301**, an AV system operates in a fully autonomous mode (that is, driving without manual assistance). In step **302**, a teleoperation event is generated by a monitoring process (**332** in **FIG. 3B**) on the AV system. In some implementations, this begins the teleoperation. In step **303**, based on the generated teleoperation event, a teleoperation request is generated by an event handling process (**334** in **FIG. 3B**), which requests the teleoperation system to begin a tele-interaction with the AV system. In response to the request, the teleoperation system **290** may allocate an available teleoperator and present the teleoperation request to the teleoperator. In some cases, the teleoperation request may comprise information (e.g., a planned trajectory, a perceived environment, a vehicular component, or a combination of them, among other things) of the AV system. Meanwhile, while awaiting a teleoperation to be issued by the teleoperator, the AV system may implement a fallback operation **307**.

In step **304**, the teleoperator accepts the teleoperation request and engages in the tele-interaction. The tele-interactions can vary; for example, the teleoperation server may recommend possible teleoperations through an interface to the teleoperator, and the teleoperator can select one or more of the recommended teleoperations and cause the teleoperations to be sent to the AV system. In some implementations, the teleoperation server renders an environment of the AV system through a user interface to the teleoperator, and the teleoperator can see the environment to select an optimal teleoperation. In some cases, the teleoperator may enter computer codes as a teleoperation. In some examples, the teleoperator uses the interface to draw a recommended trajectory for the AV along which to continue its driving.

Based on the tele-interaction, the teleoperator may issue a suitable teleoperation, which is then processed by a teleoperation handling process (**336** in **FIG. 3B**). In step **305**, the teleoperation handling process sends the teleoperation to the AV system to affect the autonomous driving capabilities of the AV. In step **306**, once the AV system completes the execution of the teleoperation or aborts the teleoperation? or the teleoperation is terminated by the teleoperator, the teleoperation ends. The AV system may return to the autonomous mode **301** and the AV system listens for another teleoperation event.

### Teleoperation Client

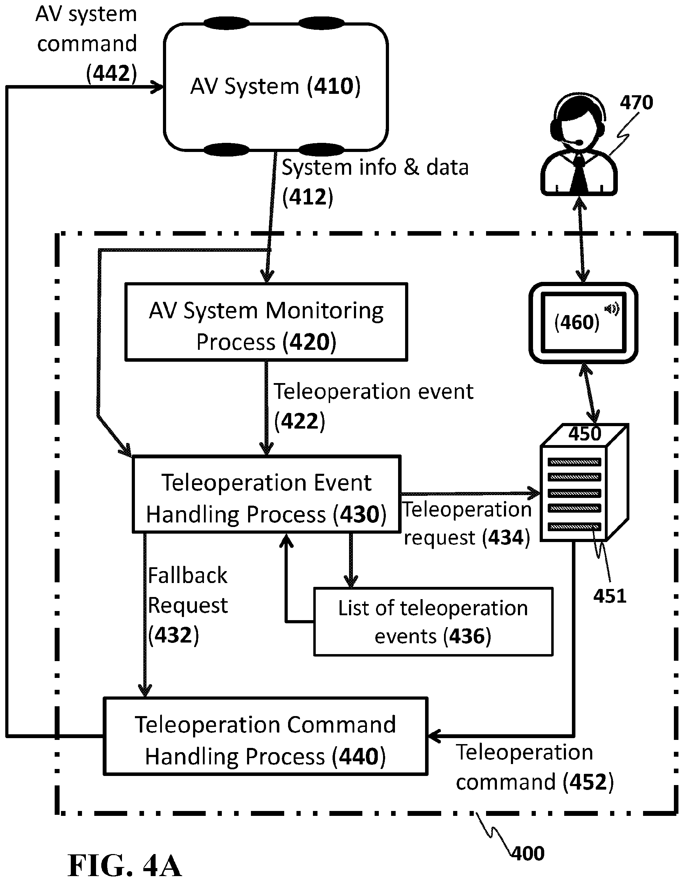

**FIG. 4A** shows an exemplary flowchart of a teleoperation client **201**. In some implementations, the teleoperation client **201** can be integrated as a part of an AV system **410**. In some examples, the teleoperation client **201** is distinct from the AV system **410** and maintains communication with the AV system **410**. In some instances, the teleoperation client **201** may comprise an AV system monitoring process **420**, a teleoperation event handling process **430**, and a teleoperation command handling process **440**. The AV system monitoring process **420** may read system information and data **412** for analysis. An analysis result may generate a teleoperation event **422** to the teleoperation event handling process **430**. The teleoperation event handling process **430** may send out a teleoperation request **434** to a teleoperation server **450** and a fallback request **432** to the teleoperation command handling process **440**. In some implementations, the teleoperation server **450** may present a user interface **460** for a teleoperator **470** to perform tele-interaction with the AV system **410**. In response to actions of the teleoperator through the user interface, the teleoperation server may issue a teleoperation command **452** that expresses the teleoperation in a form for use by the teleoperation command handling process **440**. The teleoperation command handling process **440** translates the teleoperation command into an AV system command **442** expressed in a form useful for the AV system **410** and sends the command to the AV system.

AV System Monitoring Process. The AV system monitoring process **420** may receive system information and data **412** to monitor the operation status (e.g., velocity, acceleration, steering, data communications, perception, and trajectory planning) of the AV system **410**. The operation status may be based on directly reading outputs of hardware components or software processes or both of the AV system **410**, or indirectly inferring, e.g., computationally or statistically, the outputs by measuring associated quantities, or both. In some implementations, the AV system monitoring process **420** may derive information (e.g., computing a statistic, or comparing monitored conditions with knowledge in a database) from the operation status. Based on the monitored operation status or derived information or both, the monitoring process **420** may determine a teleoperation event **422** for which a teleoperation **452** ought to be generated.

When one or more components of the AV system **22** (**FIG. 1****)** is in an abnormal or unexpected condition (e.g., malfunctions or generates an unusual output), a teleoperation event (**422** in **FIG. 4A**) may be triggered. For instance, a brake malfunctions; a flat tire occurs; the field of view of a vision sensor is blocked; a frame rate of a vision sensor drops below a threshold; an AV system's movement does not match with a current steering angle, a throttle level, a brake level, or a combination of them; a fault software code; a reduced signal strength; an increased noise level; an unknown object perceived in the environment of the AV system; a motion planning process is unable to find a trajectory towards the goal due to a planning error; inaccessibility to a data source (e.g., a database, a sensor, and a map data source); or combinations of them.

In some implementations, a teleoperation event (**422** in **FIG. 4A**) may be triggered upon an even or a request. Examples include: a detour, a protest, a fire, an accident, a flood, a fallen tree or rock, a medical emergency, a police request, a request by an occupant in the AV (e.g., a passenger does not like driving behaviors of the AV system), a request by a user of the AV (e.g., a package sender using the AV system to ship packages wants to change a new trajectory or a destination), or initiation by a teleoperator, or combinations of them.

A teleoperation event **422** generated by the AV system monitoring process **420** may comprise one or more of the following items of information:
1. One or more outputs from hardware components or software processes of the AV system **410**, e.g., video streams from a camera, signals of a sensor (e.g., LIDAR, and a radar), tracked objects from a perception system, dynamic quantities (e.g., velocity and orientation) of the AV system, throttle levels, brake levels, or a trajectory identified by a motion planning process, or combinations of them.
2. Status of hardware components and or software processes of the AV system **410**, e.g., a failure in sensor operations, a heavy load in a motion planning process, a long queue, or a long time in a decision making process. The status information may be used for determining an applicable teleoperation.
3. Relationships between measurements and estimates or thresholds. For example, the number of feasible trajectories towards a goal is smaller than a threshold (e.g., 1, 2, 3, 4, 5 or 10). The number of unknown objects perceived in an environment near the AV system is larger than a threshold (e.g., 0, 1, 2, 3, 4, 5, 6, 7, 8, 9, or 10). A confidence level of a variable (e.g., a signal intensity, a velocity, an orientation, a data rate, a distance to a perceived object, or a geolocation position) drops below a certain threshold (e.g., 100%, 95%, 90%, 85%, 80%, 75%, 70%, 65%, 60%, 55%, or 50%). The deviation of a measured quantity from an estimate is beyond a threshold (e.g., at least 1%, 2%, 3%, 4%, 5%, 10%, 15%, 20%, 25%, 30%, 35%, 40%, 45% or 50%). The deviation may be set deterministically or inferred probabilistically by a machine learning approach.
4. Absence of certain data from the AV system **410** or from other data sources or both, such as map data, sensor data, connectivity data, GPS data, infrastructure data, or vehicle-to-vehicle data.
5. Presence of certain data from the AV system **410** or from other data sources or both, such as an unexpected occupant in the AV, an unexpected login into the AV system, or unexpected data injected into the AV system **410**.
6. Presence of a request, such as a request for teleoperation assistance made by an occupant of the AV or a user of the AV system **410**.
7. A hazardous condition in the AV system **410** or in the environment of the AV system **410**. Examples include a fire, a flat tire, a bomb.
8. Known facts regarding the AV system **410** or the environment of the AV system **410**. Examples include: any objects perceived in the past or current environment of the AV system **410**; any past, current or future travel rules; any past, current or future trajectories; a construction zone; and a lane shift.
9. Unrecognizable matters. Examples include: a detected object in the past or current environment of the AV system **410** cannot be recognized by the AV system **410**; any past, current or future travel rules cannot be interpreted by the AV system **410**; any past, current or future trajectories cannot be planned; and an interference (e.g., a construction zone and a detour) on a road segment.

The existence of circumstances suggesting the occurrence of an event need not be based on explicit information from the AV system **410** but can be inferred. For example, in some implementations, the AV system monitoring process **420** may determine or infer a failure in the AV system **410** by pattern recognition. For example, one or more signal values received from the AV system **410** that are out of a specified pattern may be determined as a system failure. Patterns can be hand-crafted or deduced from data via machine learning approaches such as re-enforcement learning or deep learning.

In some implementations, the AV system monitoring process **420** may detect a failure in the AV system **410** by a model-based approach. A model of the monitored hardware component or software process is constructed and a current state of the model is estimated using past inputs or past measurements. When a measurement associated with the current state deviates from its estimate, a system failure may occur. For example, dynamic quantities (e.g., velocity and orientation) of the AV with respect to throttle and steering commands is described in a dynamics model, and the monitoring process **420** uses the dynamics model to estimate the dynamic quantities at time t based on the throttle and steering commands at time t-1. When the measured dynamic quantities at time t differ from the estimated dynamic quantities by at least 1%, 2%, 3%, 4%, 5%, 10%, 15%, 20%, 25%, 30%, 35%, 40%, 45% or 50%, the monitoring process **420** determines a system failure. A model may be hand-designed or identified using system identification approaches or learned using machine learning approaches (e.g., neural networks).

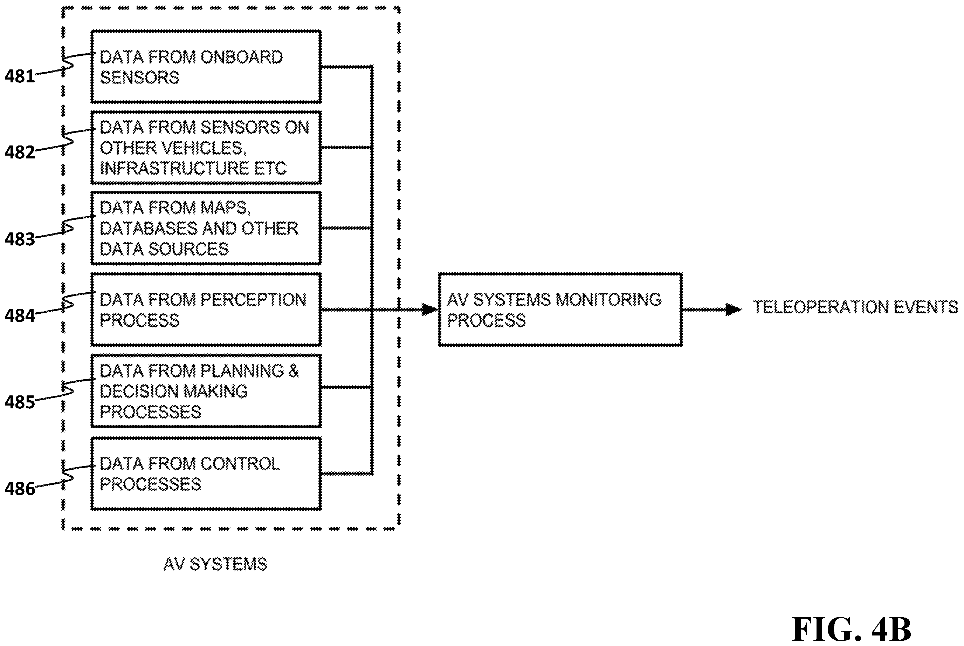

**FIG. 4B** illustrates examples of teleoperation events triggered by data from various data sources and their relevance to teleoperation as follows.
1. Data from a sensor onboard the AV (**481**). For example, no image may have been sent from a certain vision sensor during a certain period of time, indicating that the vision sensor is no longer functional. This may impact the AV system's ability to avoid or stop for an obstacle in the view of the vision sensor.
2. Data from sensors off board the AV, e.g., from other vehicles and infrastructure (**482**). For example, the AV system may receive notification from a nearby emergency vehicle and be expected to make way to yield to the emergency vehicle. The teleoperator may assist the AV system to find an appropriate stopping position on the side of the road.
3. Data from maps, databases, and other data sources (**483**). For example, the AV system may have reached a dedicated teleoperation area marked on the map, e.g., an area where deference by the AV system to teleoperations from a teleoperation system is required. The AV system should find an appropriate stopping location and await teleoperations.
4. Data from a perception process of the AV system (**484**). For example, a perception process may detect an unknown object present on the planned trajectory of the AV. The AV system may stop for the object and await a teleoperator's assistance in classifying the object.
5. Data from a motion planning process of the AV system (**485**). For example, the motion planning process may not have been able to find a feasible trajectory to the goal for a certain amount of time. A teleoperator can manually assign a trajectory to move the AV system forward to the goal.
6. Data from a control process of the AV system (**486**). For example, a controller of the AV system may have experienced a failure that leads the AV system to not be drivable. The teleoperator may notify an emergency service provider to tow the AV.
7. Data from a government agency. For example, data from a police office may show that a road segment is closed.
8. Mismatch on data. For example, a perceived road segment is different from the information provided by a map.

Teleoperation event handling process. Referring again to **FIG. 4A**, after the teleoperation event handling process **430** receives the teleoperation event **422**, it may use the teleoperation event **422** or system information and data **412** or both to derive important features (e.g., safety, malfunctioning), which may be included in a teleoperation request **434**. Examples of important features are as follows.
1. Current operation status of a hardware component or a software process of the AV system **410**, which can be a binary measurement (e.g., indicating functional or not), a category measurement or a numerical scale, or combinations of them.
2. Active teleoperation events, which include a list of teleoperation events for which teleoperations are being requested or are being handled under teleoperation or both. For example, a motion planning process of the AV system 410 may fail to find a feasible trajectory to the goal, and a first teleoperation event has been generated. While awaiting a teleoperation from a teleoperator in response to that request, the AV system may perceive an ambulance coming and a second teleoperation event is generated that triggers a second teleoperation request to a teleoperator to guide the AV system how to yield the ambulance. The first and the second teleoperation events may be placed into the list of active teleoperation events **436**. The first and the second teleoperation events may be consolidated because they share a similar cause: failure of the motion planning process. In other words, when two or more teleoperation events **422** are generated, the teleoperation event handling process **430** may consolidate some of the teleoperation events **422**. A merit of the consolidation is to let the teleoperator **470** handle similar teleoperation events together.
3. Perceived data about an environment near the AV system **410**, for example, obstacles perceived by a perception process, or video streams from a camera.

The teleoperation event handling process **430** may generate a fallback request **432** and send it to the teleoperation command handling process **440**. The fallback request **432** specifies one or more fallback operations for the AV system **410** to implement in response to the teleoperation events **422** while waiting for one or more teleoperations **452**. Examples of fallback operations are described as follows.
1. The AV system may remain in a fully autonomous driving mode, or may allow or request a person to assist in a semi-autonomous driving mode or to take over driving in a fully manual driving mode (that is, one in which no autonomous driving capability is active).
2. The AV system may maintain a nominal (e.g., current) velocity or reduce the driving velocity.
3. The AV system may continue following a current trajectory towards the goal. In some cases, the AV system may plan a new trajectory from its current location to a safe-to-stop location (e.g., a parking lot, an empty space on the side of the road, an emergency lane, a shoulder, a green space, and an AV service center). The AV system may maneuver the AV along the new trajectory with the capability to stop to avoid a traffic jam or accident or hitting an object (e.g., another vehicle or a pedestrian). (Additional information about such a maneuver is found in United States patent application serial number 15/477,833, filed April 3, 2017 and incorporated here by reference.)
4. The AV system may invoke a backup system. For instance, a cellular communication system may be out of order, and a satellite communication system can then be invoked; a high-resolution sensor may malfunction and a low-resolution sensor may be invoked, where a sensor may include a radar, a LIDAR, a camera, or a video recorder; a remote database (e.g., map data) may become inaccessible real-time, and an in-vehicle database may be invoked for the purpose.
5. The AV system may apply a driving model trained in a past condition (e.g., a geographic region, a day time, an evening time, and a peak time) to a new condition. For instance, a driving model created based on the environment in town A may be applied to driving in town B; a driving model created based on the daytime may be applied to driving in the evening or night.
6. The AV system may not be allowed to perform certain travel preferences. For example, a fallback operation may disallow the AV system to pass another vehicle.

In some implementations, a fallback request **432** may, for example, specify one or more of the following (and a wide variety of other actions and operations and combinations of them): keep traversing the current planned trajectory autonomously; change the goal to an AV service center and re-plan the trajectory to the new goal based on autonomous driving; follow autonomously the current trajectory with a slower velocity; re-plan a trajectory to stop at the closest location that is safe to stop; or autonomously decelerate until stopped.

Each fallback operation can have two main attributes: one or more required system processes (e.g., minimum required onboard processes) and a cost (e.g., a computed cost) of the fallback operation. Examples of system processes include maneuvering, data communications, database access, motion planning, perception, or sensing, or combinations of them. A cost represents how much the fallback operation deviates from a nominal autonomous driving mode. For example, an AV system without failure may drive at a nominal velocity (e.g., 40 mph); when a failure process occurs, a fallback request to keep traversing autonomously the current planned trajectory with a reduced velocity (e.g., 20 mph) may not need to invoke a motion planning process but may require at least perception and sensing processes so that the AV system can avoid hitting objects. The cost of this example may comprise how much the velocity is reduced from the nominal velocity of the AV system typically driving on the same road, and how much perception accuracy the AV system will sacrifice when executing the perception and sensing processes without invoking the motion planning process.

A cost of a fallback operation may be described, for example, as a function of the fallback operation, the teleoperation event, and the current operation status of the AV system. When a fallback request specifies two or more fallback operations, the costs of individual fallback operations are added, or weighted-summed. The selection of one or more appropriate fallback operations may be based on priority. Some implementations may utilize a decision tree to determine a hierarchy of the selection. In some implementations, the selection of one or more appropriate fallback operations to be included in the fallback request can be based on solving a combinatorial optimization problem. Some implementations of the selection may be based on a machine learning approach, where the best fallback operation or an optimal set of fallback operations is inferred from a database. The database may comprise past selections in various teleoperation events.

When receiving a teleoperation event, the teleoperation event handling process 430 may initialize a list of fallback operations from which to make its selection, and remove the fallback operations that cannot invoke required system processes or whose cost is beyond a threshold or both. When two or more fallback operations remain on the list, the one with the least cost may be selected. For example, a first fallback operation for which the AV system would traverse a new trajectory to a safe stopping place may require processes of sensing, perception, motion planning, and maneuvering to be functional. A second fallback operation for which the AV system immediately starts to slow down to a stop along an existing trajectory may require the maneuvering process to be operational. If all the required processes of the two fallback operations remain functional, their costs are compared to determine which fallback operation should be executed. If the motion planning process of the AV system is out of order, the second fallback operation would be chosen since the first fallback operation is infeasible.

The teleoperation event handling process **430** may send a teleoperation request **434** to the teleoperation server **420**. When the teleoperation request **434** arrives at the teleoperation server **450**, the server may place the teleoperation request **434** in a queue **451** to allocate an available human teleoperator **470**. When the allocated teleoperator **470** becomes available, the teleoperation request **434** is presented on a teleoperation interface **460** to the teleoperator **470**. Allocating teleoperators **470** to teleoperation requests **434** may be based on one or more of the following: time (e.g., peak or non-peak hours, seasons, day time, and night time), knowledge of or experience with the vehicle (e.g., vehicle make and model), or knowledge of or experience in the neighboring environment of the vehicle (e.g., country, state, city, town, street, and landmarks) and a language to be used (e.g., an oral communication may be used between a teleoperator and a user of the AV system; a sequence of texts may be presented to a user of the AV system).

The teleoperation request **434** may comprise one or more of the following: relevant information about an AV system failure or other condition, AV system information and data **412**, the teleoperation event **422**, important features, currently active teleoperation events, one or more teleoperations, and data of the AV system associated with each active teleoperation event.

The teleoperation event handling process **430** may initialize on a client or on the server **450**, or both, a list of potential teleoperations. Each potential teleoperation is associated with one or more (e.g., required) hardware components or software processes or both. Potential teleoperations that have unmet requirements may be removed from the list. For example, on a teleoperation server **450**, a teleoperator **470** may tele-interact with the AV system **410** through the teleoperation system and issue a teleoperation command **452** comprising a new trajectory, which may require the maneuver process and the perception process to be operational so that the AV system **410** can drive along the specified trajectory without hitting any object. The remaining potential teleoperations on the list may be ranked based on how easy they are for the teleoperator **470** to tele-interact with the AV system **410** with respect to current active teleoperation events. A tele-interaction able to address more active teleoperation events is ranked higher.

The teleoperator **470** may review the information on the interface **460** and issue one or more teleoperation commands **452**. A teleoperation command **452** may be expressed at one or more levels. For example, a high-level command may be expressed in a spoken natural language, or a written natural language, or both, for example "turn right, go straight, and make a u-turn". A middle-level command may be expressed as an alphanumeric string, for example, "a001, b005, a003", where a001 is a code representing turning right, b005 representing going straight, and a003 representing making a u-turn. A low-level command may be expressed as machine instructions, for example,

```
             for a = 1: 90
                 right-turn 1 degree;
                 a++;
             end
             for t = 1:1000
                 go straight;
                 t++;
             end
             for c = 1:180
                 left-turn 1 degree;
                 c++;
             end
```

Regardless of the level, the teleoperation command **452** may comprise a description of a behavior of the AV system **410**, or one or more steps to be executed by the AV system **410**, or both. When the teleoperation command handling process **440** receives the teleoperation command **452**, it converts it into AV system commands **442** for controlling and maneuvering the AV system.

An AV system command **442** in general comprises machine instructions, for example, expressed in an assembly language or a low-level language, e.g., C/C++. When a teleoperation command **452** is expressed in a high-level language, such as a natural language, the teleoperation command handling process **440** may convert the teleoperation command **452** into machine instructions for the AV system **410**.

Teleoperation command handling process. The teleoperation command handling process **440** handles fallback requests from the teleoperation event handling process **430** based on one or more teleoperation events **422**, teleoperation commands **452** issued by the teleoperator **470** via the teleoperation interface **460**, or both. In some implementations, a difference (e.g., a conflict) may exist between a fallback request **432** and a teleoperation command **452**. For example, a fallback request **432** may ask the AV system **410** to operate at a reduced velocity along an existing trajectory, but simultaneously the teleoperation command **452** may ask the AV system **410** to operate at a nominal speed along a new trajectory. Thus, the teleoperation command handling process **440** has to mediate the difference to make sure the AV system **410** drives safely during a transition between a fallback operation and a teleoperation.

In some implementations, the teleoperator **470** may initiate a tele-interaction without a teleoperation request **434** having been generated. The teleoperator **470** may independently initiate a teleoperation command **452** to the teleoperation command handling process **440**. For example, a weather condition may change from sunny to snowy, and the teleoperator may request the AV system **410** to drive back to an AV service center although the AV system monitoring process **420** has not generated any teleoperation event **422** in response to the weather change.

The teleoperation command handling process **440** takes a teleoperation command **452** issued by a teleoperator **470** through a teleoperation interface **460** and translates the teleoperation command **452** into one or more AV system commands **442**. The AV system commands **442** are then sent to corresponding hardware components or software processes of the AV system **410**.

### Teleoperation Server

In **FIG. 4A**, a teleoperation system **400** comprises a teleoperation server **450**, which may present an interface **460** to allow a teleoperator **470** to tele-interact with the AV system **410** through the teleoperation system. The teleoperation system **400** enables different types of tele-interactions for the teleoperator **470** to interact with the AV system **410** and affect the AV system's behavior, e.g., affect one or more of the autonomous driving capabilities.

When a teleoperation server **450** receives a teleoperation request **434**, the teleoperation server **450** analyzes the teleoperation request **434** and the associated data, such as relevant information of a system failure, system information and data **412**, the teleoperation event **422**, important features, currently active teleoperation events, one or more teleoperations, or data of the AV systems associated with each active teleoperation event, or combinations of them. The teleoperation server **450** may present corresponding information to the teleoperator **470**.

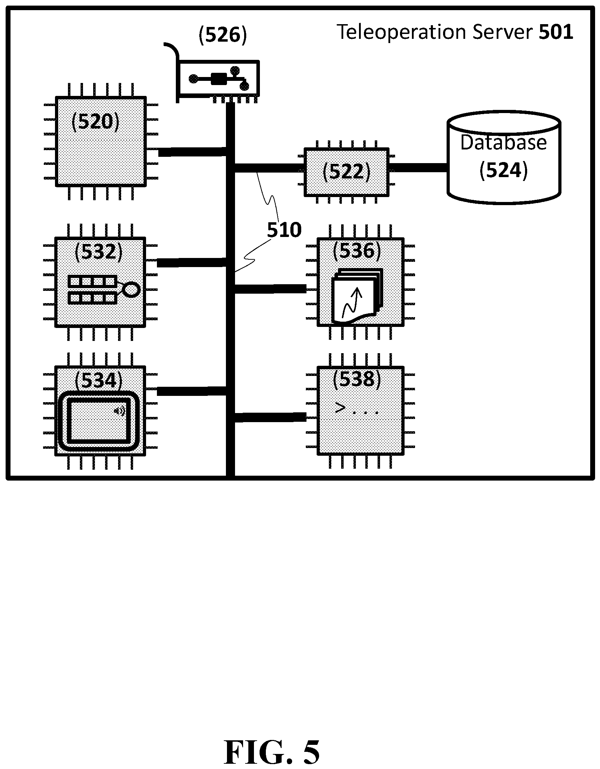

**FIG. 5** shows an exemplary architecture of a teleoperation server **501**, which may comprise software loaded on memory **522** being executed by a processor **520**, or may be hardware comprising one or more of the following: a data bus **510**, a processor **520**, memory **522**, a database **524**, and a communication interface **526**.

When a teleoperation request arrives at the communication interface **526** of the teleoperation server, the teleoperation request may be handled by a queuing process **532**. In some implementations, the queuing process **532** may consider a first-in first-out method. In some cases, the queuing process **532** may evaluate the urgency of the teleoperation request, and then prioritize the urgent teleoperation request. A degree of urgency may be associated with safety. For example, an event that an AV system is under a fire may be placed with a high degree of urgency; a flat tire occurrence where the AV system has been parked in a safe place may be placed with a low degree of urgency.

Prioritizing a teleoperation request may utilize a decision tree to determine a hierarchy of existing teleoperation requests. In some implementations, prioritization can be based on solving a combinatorial optimization problem. Some implementations of the prioritization may be based on a machine learning approach analyzing a database; the database may comprise past teleoperation requests.

The teleoperation server **501** may comprise an interface manager **534**, which renders content for a teleoperator to conduct a tele-interaction session. The teleoperator may conduct the tele-interaction on trajectory planning, where one or more trajectory primitives are used based on a primitive adjusting process **536** (whose details will be described below). When the teleoperator reviews relevant information, he may issue a teleoperation command. The teleoperation server may comprise a teleoperation command issuer **538** to communicate the command to the teleoperation command handling process of a teleoperation client. In some implementations, the teleoperation command issuer **538** may convert the teleoperation command into suitable machine instructions, e.g., alphanumeric strings or computer code.

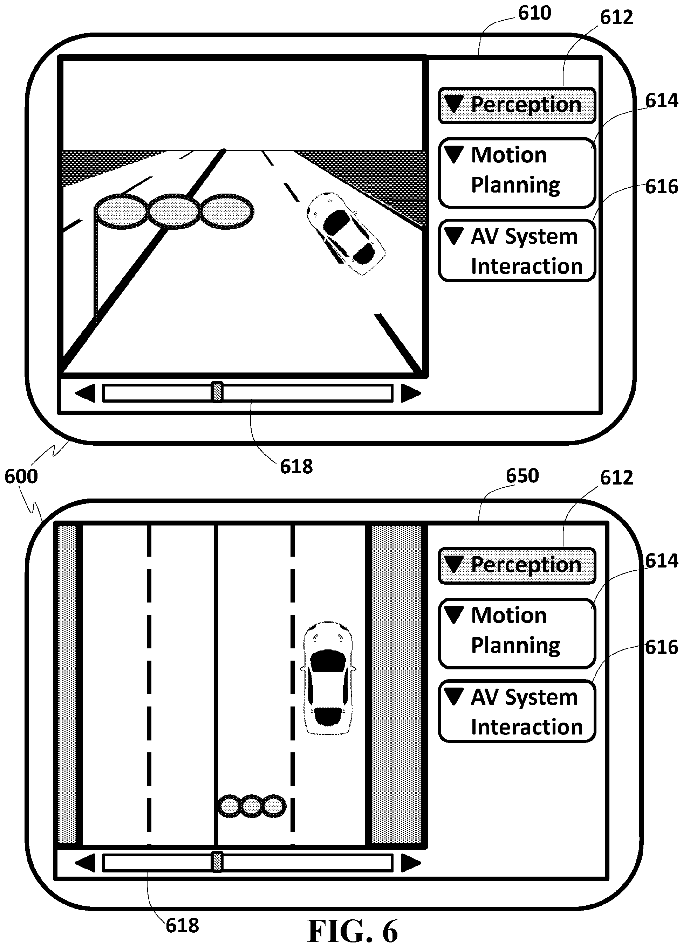

A tele-interaction between a teleoperator and an AV system may rely on an interface apparatus. For example, **FIG. 6** illustrates an apparatus **600** with which the teleoperator can choose what information (e.g., perception **612**, motion planning **614**, or AV system interaction **616** or combinations of them) to be displayed. In this example, the teleoperator may choose perception information **612**, and the interface **610** may show a field of view of a vision sensor from the AV system. In some cases, the interface **650** may show a bird's-eye view of the vision sensor. Some implementations may comprise both a field of view and a bird's-eye view. The field of view or the bird's-eye view may be a view experienced by the AV system at the current moment, or a snap-shot at a past time or both. The perception information may comprise map information. The perception information may be an image or a video showing a 2D or a 3D view. When a video is presented, the interfaces **610** and **650** may comprise a navigation bar **618** to allow the teleoperator to control the video. In some implementations, the perception information may comprise processed data; for example, segmentation on images, perceived objects in vision data, detected but unrecognizable objects in vision data.

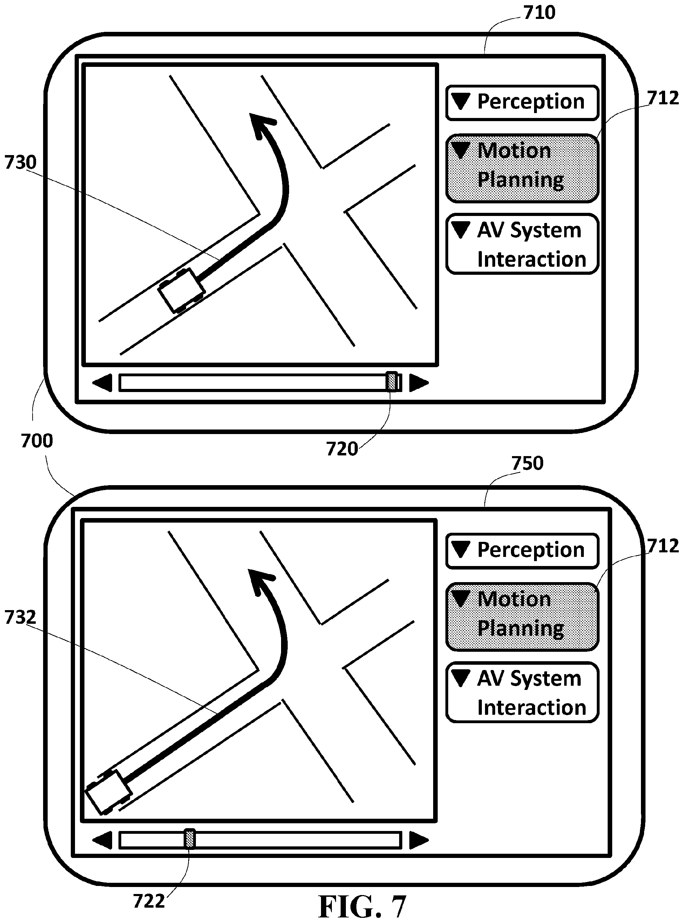

For example, **FIG. 7** illustrates an apparatus **700** with which the teleoperator has chosen motion planning information **712** to be displayed on the interface **710**. In some implementations, the interface **710** may show a map, a trajectory of the AV, a geolocation of the AV, or an orientation of the AV, or combinations of them. The trajectory may be a current trajectory **730** of the AV at the current moment, or a snap-shot at a past time, or a combination of them. The perception information may be shown as an image or a video showing a 2D or a 3D view. When a video is presented, the interfaces **710** and **750** may comprise a navigation bar **720** and **722,** respectively. For instance, the interface **710** shows a current trajectory **730**, but the teleoperator may rewind the display of the trajectory by moving the navigation bar **720** to a past time point **722** shown in the interface **750**.

Referring to **FIG. 2A**, the teleoperation data associated with the teleoperation request may be stored in a remote database **226** by the AV system, and the teleoperation server **210** retrieves the teleoperation data from the database **226**. In some implementations, the teleoperation data may be transmitted by the AV system to the teleoperation server along with the teleoperation request.

Tele-interaction with the AV system. The teleoperation server may enable the teleoperator to interact with a hardware component or a software process of the AV system, for example, one or more of the autonomous driving capabilities. Different types of tele-interactions are allowed. For example, a tele-interaction on localization helps the AV system to identify the AV system's location when an onboard localization process fails; a tele-interaction on trajectory helps the AV system to identify a new trajectory or update an existing trajectory; a tele-interaction on annotation helps the AV system to recognize a perceived object. Many other examples exist.

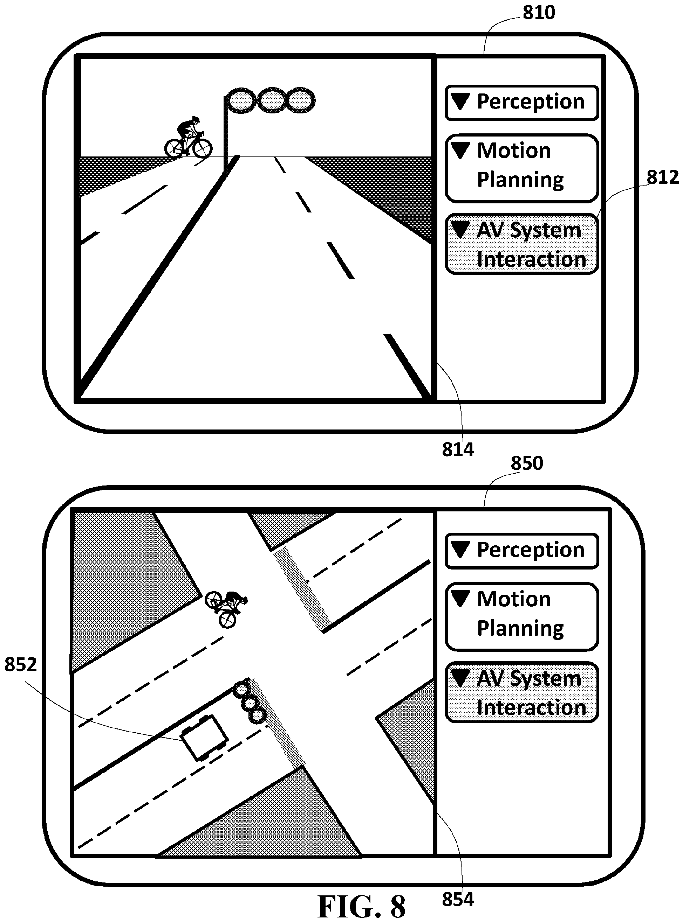

Tele-interaction on localization. When a localization component (i.e., a process that determines the geolocation of the AV) on the AV system fails, a teleoperation event for the failed localization is generated. The teleoperator may invoke tele-interaction with respect to localization for the AV system, which guides the AV system to re-localize itself. For example, **FIG. 8** illustrates a scenario in which the AV system is unable to localize itself, and a teleoperation request is sent to a teleoperator. The teleoperation server presents to the teleoperator an interface **810**, and allows the teleoperator to activate an AV system tele-interaction **812**. The teleoperation request may be transmitted along with perception data about the environment near the AV system, and the interface **810** displays a field of view **814**. The teleoperator may review the environment and map data, and determine the location of the AV system on the map data. The interface **810** may change to the interface **850** during the tele-interaction and show a bird's-eye view **854** on the map data, and the teleoperator can place the location of the AV system at the spot **852**.

The information identifying the position of the spot **852** is transmitted within a teleoperation command back to the AV system. In some implementations, the spot **852** identified by the teleoperator may be treated by the teleoperation command handling process as a deterministic command. Thus, a motion planning process may resume with the spot **852** considered as a starting position and search for an optimal trajectory toward the original goal.

In some implementations, the spot **852** may be treated as a non-deterministic location, and the teleoperation command handling process may use probabilistic reasoning to identify a true geolocation on the map data. For instance, the spot **852** may be considered as prior knowledge, and a conditional probability on the prior knowledge may be computed to infer a true geolocation of the AV system. In some cases, the conditional probability may consider other information comprising one or more of the following: past or current or both perception data, past or current or both trajectory data, map data, sensing data from an onboard sensor, sensing data from an off-board sensor, and data from an external data source.

Tele-interaction on motion planning. When a motion planning process on the AV system fails, a teleoperation event for the failed motion planning process may be generated. The teleoperator may invoke tele-interaction for motion planning for the AV system, which guides the AV system to identify a trajectory.

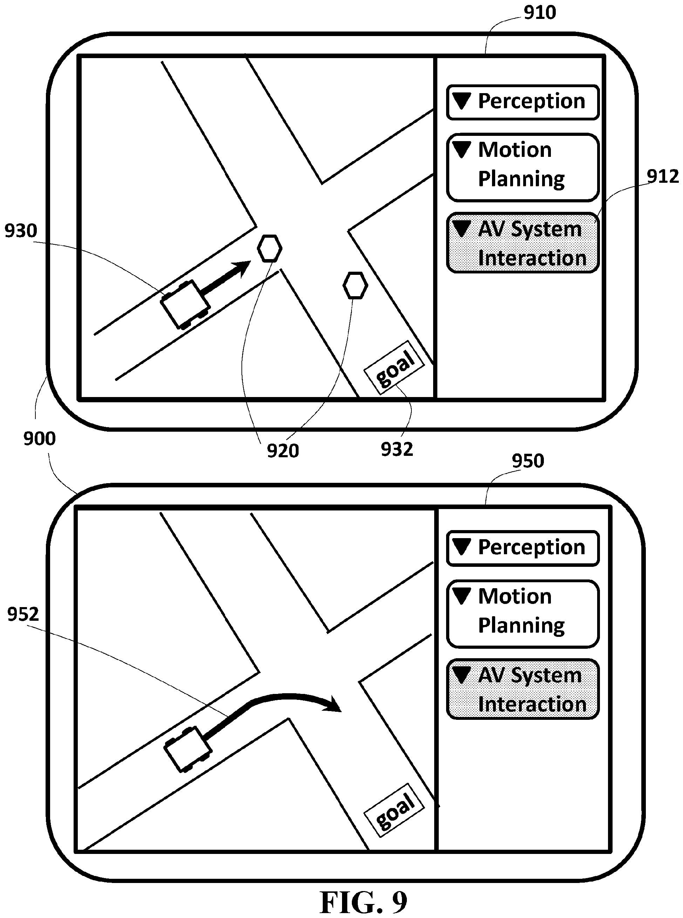

For example, **FIG. 9** illustrates a scenario in which the AV system is unable to identify an adequate trajectory, and a teleoperation request is sent to a teleoperator. The teleoperation server presents to the teleoperator an interface **910**, and allows the teleoperator to activate an AV system tele-interaction **912**. The teleoperation request was transmitted along with, e.g., geolocation of the AV or map data or both. In some applications, data about the environment near the AV system may be transmitted with the teleoperation request.

The interface **910** may display a map around the AV **930** and a goal **932**. The teleoperator may review the associated data and determine (e.g., draw) a new trajectory for the AV system **930** on the map. The interface **910** may switch to another interface **950** during the tele-interaction session and show a new trajectory **952** on the map data. A teleoperation command may comprise the new trajectory and may be sent to the teleoperation command handling process on the AV system.

In some implementations, the teleoperator provides one or more seeds **920** of a possible trajectory, and a new trajectory **952** is generated on the interface **950**. A seed may be a point or a trajectory segment. A teleoperation command may comprise the one or more seeds, the new trajectory, or both, and be sent to the teleoperation command handling process on the AV system.

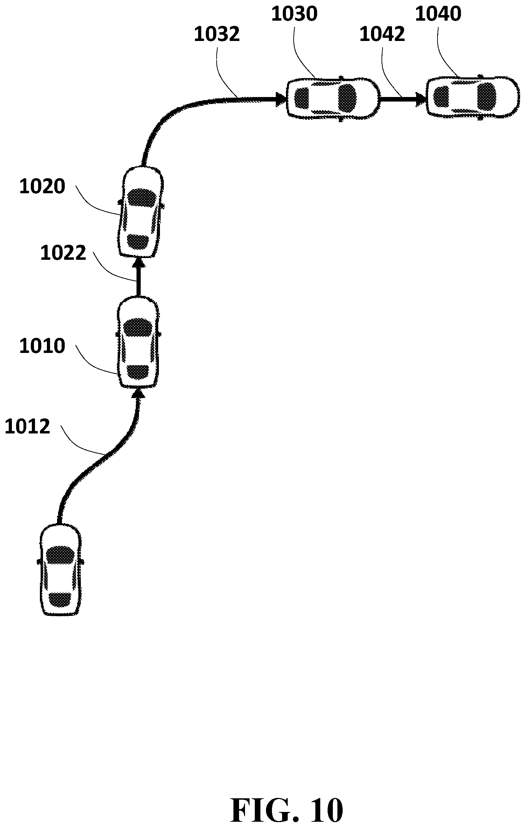

In a tele-interaction session, the teleoperator may interact with the motion planning process of the AV system. The teleoperator may perform one or more of the following:
- Issue a new goal. The motion planning process then constructs a trajectory from the current location of the AV to the new goal through the road network using map data.
- Issue a series of goals that are to be traversed sequentially. For example, **FIG. 10** illustrates that a teleoperator designated goals **1010**, **1020**, **1030** and **1040** in a tele-interaction session. The motion planning process of the AV system then constructs a trajectory with segments **1012, 1022, 1032** and **1042** that starts from its current location and then sequentially passes through the series of goals.

- Specify one or more segments of the road network to be un-traversable. For example, the motion planning process may then check a current trajectory and check if the current trajectory traverses any un-traversable segment of the road network. If so, the trajectory is replanned to avoid the un-traversable segments. For instance, the specifying may be integrated into a map, e.g., by editing annotations on the map or drawing a new road segment or both.
- Overwrite a travel preference or a travel rule. In some implementations, some events may cause the AV system to get stuck if the AV system remains executing its travel preferences or travel rules, and the teleoperator may issue a teleoperation command to overwrite the travel preference or the travel rules. For example, there may be an unusual event (e.g., a fire, a protest, an ambulance, a construction, a detour, or a marathon) taking place on the road where the AV system is driving, and a teleoperator may command the AV system to pass the unusual event by executing a lane shift to drive on an opposing lane. For instance, there may be an object (e.g., a beach ball) blocking the road, but the AV system cannot recognize what the object is and may decide to stay in put without hitting the object; a teleoperation system may be invoked, and after seeing the object via the teleoperation system, a teleoperator may issue a command to hit the object in order to let the AV system continue driving.

In some implementations, a tele-interaction may specify one or more of the following elements. The specification may be determined by the teleoperator or computationally derived or both.
- A position (including an orientation) of the AV system. In some cases, a sequence of positions is described, and a transition between two consecutive positions may be added.
- A speed profile describing a preferred velocity of the AV system on a trajectory segment or on the whole trajectory. The preferred velocity may be specified as a single value, an upper bound, a lower bound, or a range or combinations of them.
- Properties of a trajectory segment or the whole trajectory. Examples of the properties include one or more of the following: a tracking error, a confidence interval, allowance or disallowance on being modified by the AV system's motion planning process, and additional data (e.g., an updated software process, a software patch, a remote database, an area on a map, an updated map, a sensor in infrastructure, detour information, fire report, events on road networks, and a government agency's data source) to be considered by the AV system.

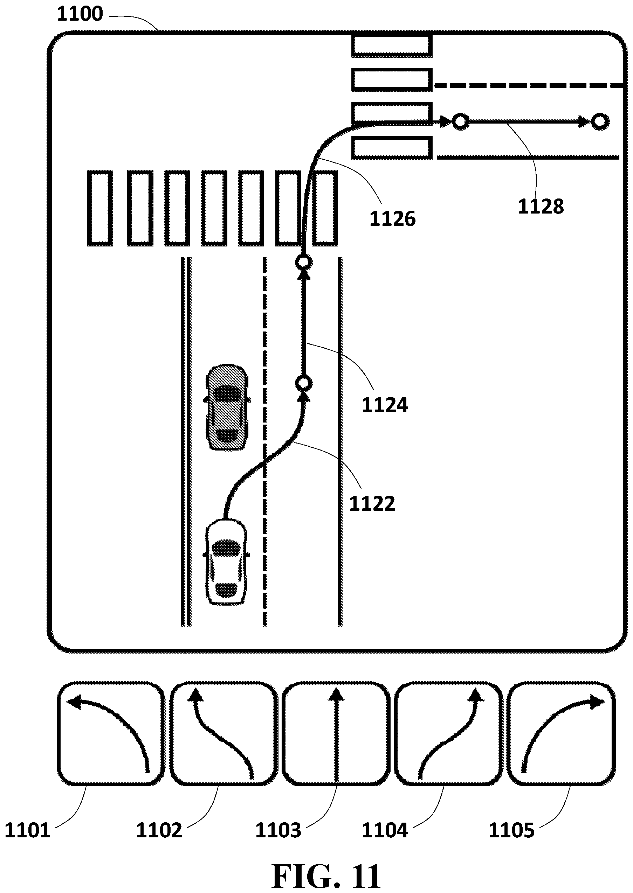

An interface for a tele-interaction on trajectory may rely on trajectory primitives for a teleoperator to generate or manipulate a trajectory. Referring to FIG. 11, an interface may show one or more trajectory primitives: a left turn **1101**, a lane change to left **1102**, a straight forward **1103**, a straight backward, a lane change to right **1104**, a right turn **1105**, a U-turn left, a U-turn right, parallel parking or unparking, and perpendicular parking or unparking, or combinations of them, to name a few. A teleoperator may pick one or more trajectory primitives to generate or manipulate a trajectory. For instance, through the interface **1100**, a trajectory can be assembled from the following primitives: a lane change to right **1122**, a straight forward **1124**, a right turn **1126**, and a straight forward **1128**.

A primitive may have a set of parameters that can be adjusted by the teleoperator. Examples of parameters may include one or more of the following: a segment length, a velocity of the AV system when entering the primitive, a velocity of the AV system driving along the primitive, a velocity of the AV when reaching the end of the primitive, allowance or prohibition of a lane change, a radius of a turn (e.g., left turn, right turn, and U-turn), a difference between a position (including orientation) at the beginning and the end of a turn, a maximum allowable yaw rotation rate of the AV during the traversal of the primitive, and an ending position of the primitive.

Referring **FIG. 5**, a teleoperation server **501** may comprise a primitive adjusting process **536** to handle the parameters across primitives. When a specific parameter is set by the teleoperator, the primitive adjusting process **536** may ensure that other parameters are automatically modified to be compatible with the current adjustment. For example, when a maximum allowable yaw rotation rate is being configured by the teleoperator, the primitive adjusting process may automatically modify the entry and exit speed of the primitive to ensure the maximum allowable yaw rotation rate is not exceeded. In some cases, the velocities of two connected primitives may be different, e.g., a first primitive may be set to 60 mph and the second may be set to 35 mph; since an immediate velocity reduction from 60 mph to 35 mph is impossible for the AV, the primitive adjusting process may computationally smooth the velocities across the two primitives.

In some implementations, after a first primitive is selected and set by a teleoperator, the primitive adjusting process **536** may recommend options of feasible primitives that may be connected with the first primitive. When a second primitive is determined to be connected with the first primitive, the default parameter values of the second primitive may be automatically inferred by the primitive adjusting process **536** to ensure the compatibility (e.g., velocity, position and turn) across the connected primitives.

The primitive adjusting process **536** may utilize other data sources, such as map data, to appropriately set default values of the parameters. For example, an entry or exit velocity of a primitive may be set according to a speed limit of the road on which the AV system is; a default lateral offset of a lane-change maneuver may be set automatically according to the width of a lane where the AV is currently driving.

Referring **FIG. 5**, a teleoperation server **501** may comprise a teleoperation command issuer **538** to handle teleoperation commands generated by a tele-interaction session. The teleoperation command issuer **538** may convert the teleoperation command into suitable machine instructions, e.g., alphanumeric strings or computer code. A teleoperation command generated by a tele-interaction session may comprise any tele-interaction activities taking place during the session. Referring **FIG. 4A**, when a teleoperation command handling process **440** in the AV system **410** receives a teleoperation command **452**, the teleoperation command handling process **440** may generate, edit, and act on the teleoperation command. In some cases, a teleoperation command **452** may comprise a trajectory, and the teleoperation command handling process may treat the trajectory as deterministic or non-deterministic or both, and then execute the trajectory. When the teleoperation command handling process **440** treats the trajectory (or a portion of the trajectory) as non-deterministic, editing the trajectory (or the portion of the trajectory) may base on probabilistic reasoning taking into account other information comprising one or more of the following: past or current or both perception data, past or current or both trajectory data, map data, sensing data from an onboard sensor, sensing data from an off board sensor, and data from an external data source.

In some implementations, the teleoperation command handling process **440** may infer missing information. For example, a pair of positions (including orientations) at two locations may have been designated by the teleoperation command **452**, but the connecting trajectory from one position to the other may be missing in the teleoperation command. The teleoperation command handling process **440** may, by itself or by invoking the motion planning process, generate a feasible connecting trajectory from one position to the other. Inferring the missing trajectory may be performed using a rule-based system that, for example, transforms a positional difference between the two positions into a smooth trajectory. Inferring the missing trajectory may be cast as an optimization problem in which variables are intermediate positions between the given pair of positions, and a cost function can be defined as positional differences between the intermediate positions; e.g., the cost function may be a sum of squares of positional differences. Minimizing the cost function will result in an optimal trajectory, which will ensure the resulting transition exhibits smooth and gradual changes in driving orientations.

In some implementations, a teleoperation command **452** may comprise a trajectory without a speed profile, the teleoperation command handling process **440** may, by itself or by invoking the motion planning process, generate a speed profile that leads to safe traversal of the trajectory by considering data from other data sources, such as positions and velocities of other objects (e.g., vehicles and pedestrians) from the perception processes and road information from the map. A speed profile may be derived by dynamic programing where velocity constraints are propagated backward from the end to the beginning of the trajectory according to safety and comfort constraints.

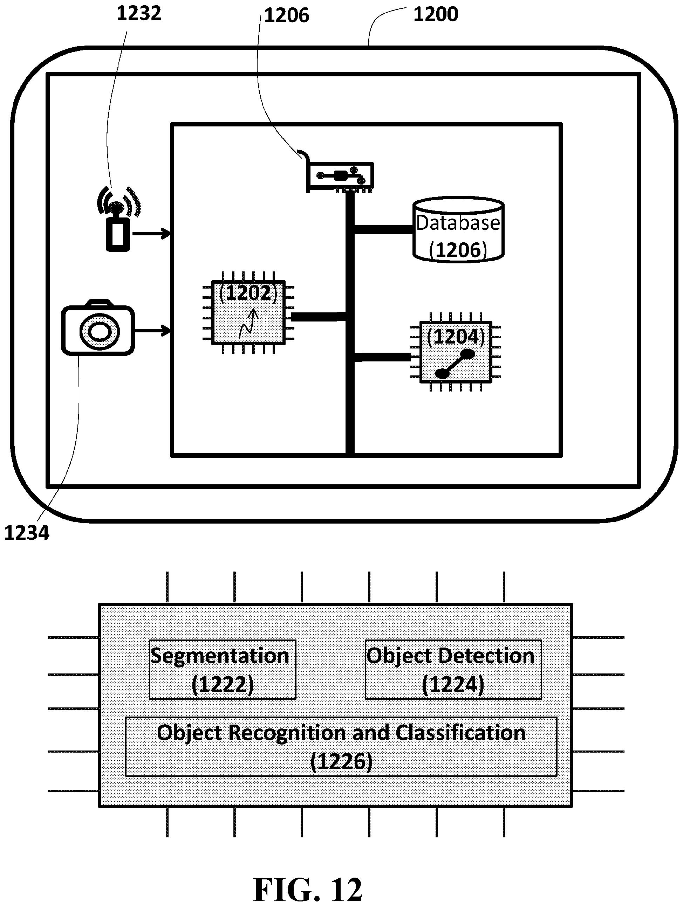

Tele-interaction on hardware components or software processes. When a teleoperation request arrives at a teleoperation server, the teleoperator may invoke tele-interaction on hardware components or software processes (e.g., autonomous driving capabilities) of the AV system. For example, **FIG. 12** illustrates a scenario in which the teleoperation server presents to the teleoperator an interface **1200**, and allows the teleoperator to activate an AV system tele-interaction to remotely handle hardware components or software processes (e.g., autonomous driving capabilities) of the AV system. The teleoperator may select a process (e.g., a motion planning process **1202**, or a perception process **1204**) and then disable or enable the process. In some cases, the interface **1200** may allow the teleoperator to edit functionalities of the process. In some cases, the interface **1200** may allow the teleoperator to view, create, change, edit, delete, import or export data entries in an onboard database **1206**.

In some implementations, the interface **1200** may allow the teleoperator to zoom into a software process for editing one or more internal steps, or zoom into a hardware component for editing one or more subcomponents. For instance, the teleoperator may select the perception process **1204,** and internal steps (e.g., segmentation **1222**, object detection **1224**, and object recognition and classification **1226**) may be displayed. The teleoperator may select a step to view, create, change, edit, delete, enable, disable, invoke, or neglect a parameter or an algorithm of the step.

In some implementations, the interface **1200** may display sensors (e.g., LIDAR **1232** or vision sensor **1234**) of the AV system. In some cases, the interface **1200** may allow the teleoperator to view, edit, enable or disable functionalities and parameters of the sensors. In some cases, the interface **1200** may allow the teleoperator to view, create, change, edit, delete, enable, disable, invoke, or neglect data acquired from the sensors.

In general, in one aspect, a method may comprise: determining that intervention in an operation of one or more autonomous driving capabilities of a vehicle is appropriate, based on the determination, enabling a person to provide information for an intervention, and causing the intervention in the operation of the one or more autonomous driving capabilities of the vehicle. Determining that intervention is appropriate may comprise receiving a request for intervention. Determining that intervention is appropriate may comprise receiving information about a status or environment of the vehicle or a related AV system. The status or the environment of the vehicle may comprise a functionality of a hardware component or software of the vehicle or the AV system.

In some implementations, the information about the status or the environment of the vehicle or the AV system may comprise a signal from a hardware component or software of the vehicle or the AV system. Determining that intervention is appropriate may comprise analyzing the signal to detect presence of unexpected data or absence of expected data. Analyzing the signal may comprise evaluating a mismatch between a measured quantity and a model-estimated quantity for the hardware component or software. Analyzing the signal may comprise using pattern recognition to evaluate an abnormal pattern in the signal. The abnormal pattern is learned by a machine learning algorithm. Analyzing the signal may comprise inferring a malfunction in the hardware component or the software. Analyzing the signal may comprise detecting an unknown object present in the environment of the vehicle or a related AV system. Analyzing the signal may comprise inferring an event that is or will be happening in the environment of the vehicle or a related AV system.

In some implementations, the request may comprise a request initiated over a wireless communication channel by a remote operator. The request may comprise data associated with a status or environment of the vehicle or a related AV system. The request may comprise one or more signals from one or more hardware components or one or more software processes of the vehicle or a related AV system.

In some implementations, based on the determination, causing a fallback intervention in the operation of the one or more autonomous driving capabilities of the vehicle. The fallback intervention may comprise causing the vehicle or a related AV system to enter a fully autonomous driving mode, a semi-autonomous driving mode, or a fully manual driving mode. The fallback intervention may comprise causing the vehicle to operate at a reduced velocity. The fallback intervention may comprise identifying a safe-to-stop location. The fallback intervention may comprise generating a new trajectory to the safe-to-stop location. The fallback intervention may comprise invoking a backup hardware component or a backup software process. The fallback intervention may comprise evaluating a functional hardware component or a functional software processes required to operate the vehicle.

In some implementations, determining that intervention is appropriate may comprise evaluating one or more active events associated with the vehicle or a related AV system, or associated with the environment of the vehicle or a related AV system. Evaluating one or more events may comprise merging two or more active events. Enabling the person to provide information for an intervention may comprise maintaining a queue based on one or more determinations that intervention is appropriate. Maintaining the queue may comprise prioritizing an intervention based on one or more of the following: a decision tree, a combinatorial optimization, a machine algorithm, and a past intervention.

In some implementations, enabling the person to provide information for an intervention may comprise allocating the person to provide the information based on availability of the person, and one or more of: (a) time, (b) knowledge of the vehicle, (c) knowledge of the environment of the vehicle, or (d) a language. Enabling the person to provide information for an intervention may comprise presenting an interactive interface. Presenting an interactive interface may comprise presenting a field of view or a bird's-eye of a vision sensor of the vehicle. Presenting an interactive interface may comprise presenting current or past or both perception information. Presenting an interactive interface may comprise presenting current or past or both trajectories. Presenting an interactive interface may comprise presenting current or past or both motion planning information. Presenting an interactive interface may comprise presenting a system diagram of the vehicle, the system diagram comprising one or more hardware components, or one or more software processes, or both. The information for the intervention may comprise a current location of the vehicle determined by the person, and the intervention may comprise treating the current location as prior knowledge and using an inference algorithm to update the current location. The intervention is based on the person identifying a goal location of the vehicle, and the intervention may comprise treating the goal location as prior knowledge and using an inference algorithm to update the goal location. The intervention may comprise a trajectory to be found by the person, and the intervention may comprise treating the trajectory as prior knowledge and using an inference algorithm to update the trajectory. The intervention may comprise one or more trajectory sampling points identified by the person, and the intervention may comprise inferring a trajectory or a trajectory segment based on the one or more trajectory sampling points.

In some implementations, inferring a trajectory or a trajectory segment is based on one or more trajectory primitives. The intervention may comprise concatenating two trajectory segments. Concatenating two trajectory segments may comprise smoothing the trajectory segments and smoothing speed profiles across the trajectory segments.

In some implementations, the intervention may comprise specifying one or more un-traversable road segments. The intervention may comprise setting a speed profile by the person, and the intervention may comprise treating the speed profile as prior knowledge and using an inference algorithm to update the speed profile. The intervention is based on inferring a speed profile by a learning algorithm. The intervention is based on inferring a steering angle by a learning algorithm. The intervention may comprise enabling, editing or disabling a hardware component or a software process. The intervention may comprise enabling, editing or disabling a subcomponent of a hardware component or a processing step of a software process. The intervention may comprise overwriting a travel preference or a travel rule. The intervention may comprise editing data, the data comprising one or more of the following: a map, sensor data in the vehicle or a related AV system, trajectory data in the vehicle or a related AV system, vision data in the vehicle or a related AV system, or any past data in the vehicle or a related AV system. Configuring the vehicle or a related AV system based on a command, the configuration comprising treating the command as prior knowledge and using an inference algorithm to update the command.

In general, in an aspect, implementations include method comprising (a) receiving an intervention request regarding an operation of one or more autonomous driving capabilities of a vehicle, (b) causing a person to interact with the vehicle over a communication channel, and (c) issuing an intervention to configure the operation of the one or more autonomous driving capabilities of a vehicle.

In some implementations, the method may comprise receiving or generating or analyzing information about a status or environment of the vehicle. The information about the status or the environment of the vehicle may comprise a functionality of a hardware component or software of the vehicle. The information about the status or the environment of the vehicle may comprise a signal from a hardware component or software of the vehicle. The information about the status or the environment of the vehicle may comprise presence of unexpected data or absence of expected data. The information about the status or the environment of the vehicle may comprise a mismatch between a measured quantity and a model-estimated quantity for a hardware component or software of the vehicle. Analyzing the information may comprise using pattern recognition to evaluate an abnormal pattern in the information. The abnormal pattern is learned by a machine learning algorithm. Analyzing the information may comprise inferring a malfunction in the hardware component or the software. Analyzing the information may comprise detecting an unknown object present in the environment of the vehicle. Analyzing the information may comprise inferring an event that is or will be happening in the environment of the vehicle. The intervention request may comprise data associated with status or environment of a vehicle or a related AV system. The intervention request may comprise one or more signals from one or more hardware components or one or more software processes of the vehicle or a related AV system.

In some implementations, the method includes maintaining a queue of one or more intervention requests. Maintaining the queue may comprise prioritizing an intervention request based on one or more of the following: a decision tree, a combinatorial optimization, a machine algorithm, and a past intervention. Allocating the person to interact with the vehicle based on availability of the person, and one or more of: (a) time, (b) knowledge of the vehicle, (c) knowledge of the environment of the vehicle, or (d) a language. Presenting an interactive interface including a field of view or a bird's-eye of a vision sensor of the vehicle. Presenting an interactive interface including current or past or both perception information. Presenting an interactive interface including a current or a past or both trajectories. Presenting an interactive interface including current or past or both motion planning information. Presenting an interactive interface including a system diagram of the vehicle, the system diagram comprising one or more hardware components, or one or more software processes, or both.

In some implementations, the intervention may comprise a current location of the vehicle by the person, and the intervention may comprise treating the current location identified by the person as prior knowledge and using an inference algorithm to update the current location. The intervention may comprise a goal location identified by the person, and the intervention may comprise treating the goal location identified as prior knowledge and using an inference algorithm to update the goal location. The intervention may comprise a trajectory identified by the person, and the intervention may comprise treating the trajectory identified by the person as prior knowledge and using an inference algorithm to update the trajectory. The intervention may comprise one or more trajectory sampling points identified by the person, and the intervention may comprise inferring a trajectory or a trajectory segment based on the one or more trajectory sampling points. Inferring a trajectory or a trajectory segment is based on one or more trajectory primitives. T the intervention may comprise concatenating two trajectory segments, concatenating two trajectory segments comprising smoothing the trajectory segments and smoothing speed profiles across the trajectory segments. The intervention may comprise specifying one or more un-traversable road segments.

In some implementations, the intervention may comprise setting a speed profile, and the intervention may comprise treating the speed profile as prior knowledge and using an inference algorithm to update the speed profile. The intervention is based on inferring a speed profile by a learning algorithm. The intervention is based on inferring a steering angle by a learning algorithm. The intervention may comprise enabling, editing or disabling a hardware component or a software process. The intervention may comprise enabling, editing or disabling a subcomponent of a hardware component or a processing step of a software process. The intervention may comprise overwriting a travel preference or a travel rule. The intervention may comprise editing data, the data comprising one or more of the following: a map, sensor data in the vehicle, trajectory data in the vehicle, vision data in the vehicle, or any past data in the vehicle.

In general, in an aspect, implementations include a vehicle having autonomous driving capabilities and comprising (a) steering, acceleration, and deceleration devices that respond to control signals from a driving control system to drive the vehicle autonomously on a road network, (b) a monitoring element on the vehicle that generates an intervention request for the vehicle to engage in an intervention interaction with a person, and (c) a communication element that receives an intervention from the person to be implemented by the driving control system by issuing control signals to the steering, acceleration, and deceleration devices to cause the vehicle to maneuver to a goal location.

In some implementations, a processor that receives information about a status or environment of the vehicle to determine that the intervention is appropriate. The status or the environment of the vehicle may comprise a functionality of a hardware component or a software process of the vehicle. The information about the status or the environment of the vehicle may comprise a signal from a hardware component or a software process of the vehicle. Determining that intervention is appropriate may comprise using pattern recognition to evaluate an abnormal pattern in the signal. The abnormal pattern is learned from a machine learning algorithm. Determining that intervention is appropriate may comprise detecting presence of unexpected data or absence of expected data in the received information. Determining that intervention is appropriate may comprise evaluating a mismatch between a measured quantity and a model-estimated quantity for a hardware component or a software process. Determining that intervention is appropriate may comprise inferring a malfunction in a hardware component or a software process. Determining that intervention is appropriate may comprise detecting an unknown object present in the environment of the vehicle. Determining that intervention is appropriate may comprise inferring an event that is or will be happening in the environment of the vehicle. The intervention request may comprise data associated with status or environment of a vehicle. The intervention request may comprise one or more signals from one or more hardware components or one or more software processes of the vehicle. A processor that causes a fallback intervention in the driving control system. The fallback intervention may comprise causing the vehicle to enter a fully autonomous driving mode, a semi-autonomous driving mode, or a fully manual driving mode. The fallback intervention may comprise causing the vehicle to operate at a reduced velocity. The fallback intervention may comprise identifying a safe-to-stop location and generating a new trajectory to the safe-to-stop location. The fallback intervention may comprise invoking a backup hardware component or a backup software process. The fallback intervention may comprise evaluating a functional hardware component or a functional software process required to operate the vehicle.

In some implementations, a processor that evaluates one or more active intervention requests associated with the vehicle or with the environment of the vehicle. Evaluating one or more active events may comprise merging two or more intervention requests. Evaluating one or more active events may comprise prioritizing an intervention request using one or more of the following: a decision tree, a combinatorial optimization, a machine algorithm, and a past intervention. A processor that treats a current location specified in an intervention as prior knowledge and using an inference algorithm to update the current location. A processor that treats a goal location specified in an intervention as prior knowledge and using an inference algorithm to update the goal location. A processor that treats a trajectory specified in an intervention as prior knowledge and using an inference algorithm to update the trajectory. A processor that treats one or more trajectory sampling points specified in an intervention as prior knowledge and using an inference algorithm to update the one or more trajectory sampling points. A processor that infers a trajectory or a trajectory segment based on the one or more trajectory sampling points. Inferring a trajectory or a trajectory segment is based on one or more trajectory primitives. A processor that concatenates two trajectory segments, the concatenating may comprise smoothing the trajectory segments and smoothing speed profiles across the trajectory segments. The intervention may comprise specifying one or more un-traversable road segments. A processor that treats a speed profile specified in an intervention as prior knowledge and using an inference algorithm to update the speed profile.

In some implementations, a processor that executes the intervention to enable, edit or disable a hardware component or a software process. A processor that executes the intervention to overwrite a travel preference or a travel rule. A processor that executes the intervention to edit data, the data comprising one or more of the following: a map, sensor data, trajectory data, vision data, or any past data.

In general, in an aspect, implementations include apparatus comprising (a) a processor configured to (1) receive an intervention request regarding operation of a vehicle and (2) extract motion information or perception information or both from the intervention request, and (b) a display configured to (1) display the motion information or the perception information and (2) allow a user to interact with operation of the vehicle and record one or more interactions.

In some implementations, the intervention request may comprise data associated with status or environment of the vehicle or a related AV system. The intervention request may comprise one or more signals from one or more hardware components or one or more software processes of the vehicle or a related AV system. The display is configured to present an interactive interface comprising a field of view or a bird's-eye of a vision sensor of the vehicle. The display is configured to present an interactive interface comprising current or past or both perception information. The display is configured to present an interactive interface comprising a current or a past or both trajectories. The display is configured to present an interactive interface comprising current or past or both motion planning information. The display is configured to present an interactive interface comprising a system diagram of the vehicle, the system diagram comprising one or more hardware components, or one or more software processes, or both. A processor that converts an interaction into an intervention for an operation of the vehicle.

In some implementations, an interaction may comprise designating a current location of the vehicle, and a processor treats the current location as prior knowledge and uses an inference algorithm to generate an updated current location as an intervention. An interaction may comprise designating a goal location, and a processor treats the goal location as prior knowledge and uses an inference algorithm to generate an updated goal location as an intervention. An interaction may comprise designating a trajectory, and a processor treats the trajectory as prior knowledge and uses an inference algorithm to generate an updated trajectory as an intervention. An interaction may comprise designating one or more trajectory sampling points, and a processor infers a trajectory or a trajectory segment based on the one or more trajectory sampling points. Inferring a trajectory or a trajectory segment is based on one or more trajectory primitives. Inferring a trajectory may comprise concatenating two trajectory segments, the concatenating comprising smoothing the trajectory segments and smoothing speed profiles across the trajectory segments.

In some implementations, an interaction may comprise specifying one or more un-traversable road segments. An interaction may comprise setting a speed profile, and a processor treats the speed profile as prior knowledge and uses an inference algorithm to generate an updated speed profile as an intervention. A processor that infers a speed profile by a learning algorithm and includes the speed profile in an intervention. A processor that infers a steering angle by a learning algorithm and includes the steering angle in the intervention. An intervention may comprise enabling, editing or disabling a hardware component or a software process. An intervention may comprise overwriting a travel preference or a travel rule. An intervention may comprise editing data, the data comprising one or more of the following: a map, sensor data in the vehicle or a related AV system, trajectory data in the vehicle or a related AV system, vision data in the vehicle or a related AV system, or any past data in the vehicle or a related AV system. An intervention may comprise one or more of the following: a trajectory, a label, a process control, an annotation, and a machine instruction.

In general, in an aspect, implementations include a method comprising causing a vehicle to drive in an autonomous mode on a road, the vehicle comprising one or more autonomous driving capabilities, receiving an intervention regarding an operation of the one or more autonomous driving capabilities, and analyzing the intervention and configuring, based on the intervention, one or more hardware components or one or more software processes of the vehicle.

In some implementations, an intervention may comprise a current location of the vehicle. Analyzing the intervention may comprise treating the current location in the intervention as prior knowledge and using an inference algorithm to update the current location. An intervention may comprise a goal location for the vehicle. Analyzing the intervention may comprise treating the goal location in the intervention as prior knowledge and using an inference algorithm to update the goal location. An intervention may comprise a trajectory for the vehicle. Analyzing the intervention may comprise treating the trajectory in the intervention as prior knowledge and using an inference algorithm to update the trajectory. An intervention may comprise one or more trajectory sampling points for the vehicle. Analyzing the intervention may comprise treating the one or more trajectory sampling points as prior knowledge and using an inference algorithm to update the one or more trajectory sampling points. Analyzing the intervention may comprise inferring a trajectory or a trajectory segment based on the one or more trajectory sampling points. Inferring a trajectory or a trajectory segment is based on one or more trajectory primitives. Inferring a trajectory or a trajectory segment may comprise concatenating two shorter trajectory segments, the concatenating may comprise smoothing the shorter trajectory segments and smoothing speed profiles across the shorter trajectory segments.

In some implementations, an intervention may comprise specifying one or more un-traversable road segments. An intervention may comprise setting a speed profile. Analyzing the intervention may comprise treating the speed profile as prior knowledge and using an inference algorithm to update the speed profile.

In some implementations, which analyzing the intervention may comprise inferring a speed profile by a learning algorithm. Analyzing the intervention may comprise inferring a steering angle by a learning algorithm. Analyzing the intervention may comprise enabling, editing or disabling a hardware component or a software process. Analyzing the intervention may comprise enabling, editing or disabling a subcomponent of a hardware component or a processing step of a software process. An intervention may comprise overwriting a travel preference or a travel rule. An intervention may comprise editing data, the data comprising one or more of the following: a map, sensor data in the vehicle or a related AV system, trajectory data in the vehicle or a related AV system, vision data in the vehicle or a related AV system, or any past data in the vehicle or a related AV system.

In general, in an aspect, implementations include a method comprising receiving, from a remote operator, machine-readable instructions regarding an operation of a vehicle, and configuring the vehicle to execute the machine-readable instructions.

In some implementations, the vehicle may comprise one or more autonomous driving capabilities. The machine-readable instructions represent a current location. The machine-readable instructions represent a goal location. The machine-readable instructions represent one or more trajectories. The machine-readable instructions represent one or more trajectory sampling points. The machine-readable instructions represent one or more speed profiles. The machine-readable instructions represent one or more un-traversable road segments. The machine-readable instructions comprise enabling, editing or disabling a hardware component or a software process. The machine-readable instructions comprise enabling, editing or disabling a subcomponent of a hardware component or a processing step of a software process. The machine-readable instructions comprise overwriting a travel preference or a travel rule. T the machine-readable instructions comprise editing data, the data comprising one or more of the following: a map, sensor data in the vehicle or a related AV system, trajectory data in the vehicle or a related AV system, vision data in the vehicle or a related AV system, or any past data in the vehicle or a related AV system.

Although the descriptions in this document have described implementations in which the teleoperator is a person, teleoperator functions can be performed partially or fully automatically.

Other implementations are also within the scope of the claims.

## Claims

1. A computer-implemented method comprising:
determining that intervention in an operation of one or more autonomous driving capabilities of a vehicle is appropriate, in which determining that intervention is appropriate comprises determining that one or more components of the vehicle are in an abnormal condition;
based on the determination, enabling a person to provide information for an intervention;
requesting a teleoperation command regarding the operation of the vehicle;
before the teleoperation command is received, configuring the vehicle to execute a fallback operation (307) of the autonomous driving capabilities;
receiving the teleoperation command (452) expressed in a natural language;
converting the teleoperation command (452) into machine instructions for the one or more autonomous driving capabilities of the vehicle; and
causing the intervention in the operation of the one or more autonomous driving capabilities of the vehicle.

2. The method of claim 1, in which determining that intervention is appropriate comprises receiving information about a status or environment of the vehicle or a related autonomous vehicle - AV - system (10, 200, 250, 481, 930),
in which the status or the environment of the vehicle comprises a functionality of a hardware component or software of the vehicle or the AV system (10, 200, 250, 481, 930), and
in which the information about the status or the environment of the vehicle or the AV system (10, 200, 250, 481, 930) comprises a signal from a hardware component or software of the vehicle or the AV system (10, 200, 250, 481, 930).

3. The method of claim 2, in which determining that intervention is appropriate comprises analyzing the signal to detect presence of unexpected data or absence of expected data, and in which analyzing the signal comprises
evaluating a mismatch between a measured quantity and a model-estimated quantity for the hardware component or software, or
using pattern recognition to evaluate an abnormal pattern in the signal, and in which the abnormal pattern is learned by a machine learning algorithm.

4. The method of claim 1, comprising, based on the determination, causing the fallback intervention in the operation of the one or more autonomous driving capabilities of the vehicle, and in which the fallback intervention comprises:
causing the vehicle or a related AV system (10, 200, 250, 481, 930) to enter a fully autonomous driving mode, a semi-autonomous driving mode, or a fully manual driving mode, or
causing the vehicle to operate at a reduced velocity, or
identifying a safe-to-stop location, and in which the fallback intervention comprises generating a new trajectory to the safe-to-stop location, or
invoking a backup hardware component or a backup software process, or
evaluating a functional hardware component or a functional software processes required to operate the vehicle.

5. The method of claim 1, in which determining that intervention is appropriate comprises evaluating one or more active events associated with the vehicle or a related AV system, or associated with the environment of the vehicle or a related AV system (10, 200, 250, 481, 930), and in which evaluating one or more events comprises merging two or more active events.

6. The method of claim 1, in which enabling the person to provide information for an intervention comprises maintaining a queue (451) based on one or more determinations that intervention is appropriate, and in which maintaining the queue (451) comprises prioritizing an intervention based on one or more of the following: a decision tree, a combinatorial optimization, a machine algorithm, and a past intervention.

7. The method of claim 1, in which enabling the person to provide information for an intervention comprises presenting an interactive interface (212, 460, 610, 650, 710, 750, 810, 850, 910, 950, 1100, 1200), and in which presenting an interactive interface comprises
presenting a field of view or a bird's-eye of a vision sensor (1234) of the vehicle, or
presenting current or past or both perception information, or
presenting current or past or both trajectories, or
presenting current or past or both motion planning information, or
presenting a system diagram of the vehicle, the system diagram comprising one or more hardware components, or one or more software processes, or both.

8. The method of claim 1, in which the information for the intervention comprises a current location of the vehicle determined by the person, and the intervention comprises treating the current location as prior knowledge and using an inference algorithm to update the current location.

9. The method of claim 1, in which the intervention is based on the person identifying a goal location (932) of the vehicle, and the intervention comprises treating the goal location as prior knowledge and using an inference algorithm to update the goal location.

10. The method of claim 1, in which the intervention comprises a trajectory to be found by the person, and the intervention comprises treating the trajectory as prior knowledge and using an inference algorithm to update the trajectory.

11. The method of claim 1, in which the intervention comprises one or more trajectory sampling points identified by the person, and the intervention comprises inferring a trajectory or a trajectory segment (1012, 1022, 1032, 1042) based on the one or more trajectory sampling points, and
in which inferring a trajectory or a trajectory segment is based on one or more trajectory primitives, or
in which the intervention comprises concatenating two trajectory segments.

12. The method of claim 1, in which the intervention comprises specifying one or more un-traversable road segments, or
in which the intervention comprises setting a speed profile by the person, and the intervention comprises treating the speed profile as prior knowledge and using an inference algorithm to update the speed profile, or
in which the intervention comprises enabling, editing or disabling a hardware component or a software process, and in which the intervention comprises enabling, editing or disabling a subcomponent of a hardware component or a processing step of a software process, or
in which the intervention comprises overwriting a travel preference or a travel rule, or
in which the intervention comprises editing data, the data comprising one or more of the following: a map, sensor data in the vehicle or a related AV system (10, 200, 250, 481, 930), trajectory data in the vehicle or a related AV system (10, 200, 250, 481, 930), vision data in the vehicle or a related AV system (10, 200, 250, 481, 930), or any past data in the vehicle or a related AV system (10, 200, 250, 481, 930).

13. The method of claim 1, comprising configuring the vehicle or a related AV system (10, 200, 250, 481, 930) based on the teleoperation command (452), the configuration comprising treating the teleoperation command (452) as prior knowledge and using an inference algorithm to update the teleoperation command (452).

14. The method of claim 1, in which the abnormal condition comprises a malfunction of a mechanical component of the vehicle, a blockage of a field of view of a vision sensor of the vehicle, or a movement of the vehicle that does not match an expected movement of the vehicle.

15. A system comprising one or more processors configured to perform the method of any of claim 1 to 14.

## Patentansprüche

1. Computerimplementiertes Verfahren, umfassend:
Bestimmen, dass ein Eingreifen in einen Betrieb einer oder mehrerer autonomer Fahrfähigkeiten eines Fahrzeugs angebracht ist, wobei das Bestimmen, dass ein Eingreifen angebracht ist, umfasst, zu bestimmen, dass eine oder mehrere Komponenten des Fahrzeugs in einem anomalen Zustand sind;
anhand der Bestimmung Befähigen einer Person, Informationen für ein Eingreifen bereitzustellen;
Anfordern eines Fernbetriebsbefehls bezüglich des Betriebs des Fahrzeugs;
bevor der Fernbetriebsbefehl empfangen wird, Konfigurieren des Fahrzeugs, einen Ausweichbetrieb (307) der autonomen Fahrfähigkeiten auszuführen;
Empfangen des Fernbetriebsbefehls (452), der in einer natürlichen Sprache ausgedrückt ist;
Umsetzen des Fernbetriebbefehls (452) in Maschinenanweisungen für die eine oder die mehreren autonomen Fahrfähigkeiten des Fahrzeugs; und
Bewirken des Eingreifens in den Betrieb der einen oder der mehreren Fahrfähigkeiten des Fahrzeugs.

2. Verfahren nach Anspruch 1, wobei das Bestimmen, dass ein Eingreifen angebracht ist, umfasst, Informationen über einen Zustand oder eine Umgebung des Fahrzeugs oder eines zugehörigen autonomen Fahrzeugsystems - AV-Systems - (10, 200, 250, 481, 930) zu empfangen,
wobei der Zustand oder die Umgebung des Fahrzeugs eine Funktionalität einer Hardware-Komponente oder einer Software des Fahrzeugs oder des AV-Systems (10, 200, 250, 481, 930) umfasst und
wobei die Informationen über den Zustand oder die Umgebung des Fahrzeugs oder des AV-Systems (10, 200, 250, 481, 930) ein Signal von einer Hardware-Komponente oder einer Software des Fahrzeugs oder des AV-Systems (10, 200, 250, 481, 930) umfassen.

3. Verfahren nach Anspruch 2, wobei das Bestimmen, dass das Eingreifen angebracht ist, umfasst, das Signal zu analysieren, um ein Vorhandensein nicht erwarteter Daten oder ein Fehlen erwarteter Daten zu detektieren, und
wobei das Analysieren des Signals Folgendes umfasst:
Bewerten eines Unterschieds zwischen einer gemessenen Größe und einer modellgeschätzten Größe für die Hardware-Komponente oder die Software oder
Verwenden einer Mustererkennung, um ein anomales Muster in dem Signal zu bewerten, und wobei das anomale Muster durch einen Maschinenlernalgorithmus erlernt wird.

4. Verfahren nach Anspruch 1, das umfasst, anhand der Bestimmung das Ausweicheingreifen in den Betrieb der einen oder der mehreren autonomen Fahrfähigkeiten des Fahrzeugs zu bewirken, wobei das Ausweicheingreifen Folgendes umfasst:
Bewirken, dass das Fahrzeug oder ein zugehöriges AV-System (10, 200, 250, 481, 930) in eine vollständig autonome Fahrbetriebsart, eine halbautonome Fahrbetriebsart oder eine vollständig manuelle Fahrbetriebsart eintritt, oder
Bewirken, dass das Fahrzeug mit einer reduzierten Geschwindigkeit arbeitet, oder
Identifizieren eines sicheren Orts zum Anhalten, wobei das Ausweicheingreifen umfasst, neue Bahn zu dem sicheren Ort zum Anhalten zu erzeugen, oder
Aufrufen einer Ersatz-Hardware-Komponente oder eines Ersatz-Software-Prozesses oder
Bewerten einer funktionalen Hardware-Komponente oder eines funktionalen Software-Prozesses, der benötigt wird, um das Fahrzeug zu betreiben.

5. Verfahren nach Anspruch 1, wobei das Bestimmen, dass ein Eingreifen angebracht ist, umfasst, ein oder mehrere aktive Ereignisse zu bewerten, die dem Fahrzeug oder einem zugehörigen AV-System zugeordnet sind, oder der Umgebung des Fahrzeugs oder eines zugehörigen AV-Systems (10, 200, 250, 481, 930) zugeordnet sind und wobei das Bewerten eines oder mehrerer Ereignisse umfasst, zwei oder mehr aktive Ereignisse zu vereinigen.

6. Verfahren nach Anspruch 1, wobei das Befähigen der Person, Informationen für ein Eingreifen bereitzustellen, umfasst, eine Warteschlange (451) anhand einer oder mehrerer Bestimmungen, dass ein Eingreifen angebracht ist, zu führen, und wobei das Führen der Warteschlange (451) umfasst, ein Eingreifen anhand eines oder mehrerer des Folgenden zu priorisieren: eines Entscheidungsbaums, einer kombinatorischen Optimierung, eines Maschinenalgorithmus und eines vergangenen Eingreifens.

7. Verfahren nach Anspruch 1, wobei das Befähigen der Person, Informationen für ein Eingreifen bereitzustellen, umfasst, eine interaktive Schnittstelle (212, 460, 610, 650, 710, 750, 810, 850, 910, 950, 1100, 1200) darzustellen, und wobei das Darstellen einer interaktiven Schnittstelle umfasst:
Darstellen eines Sichtfelds oder einer Vogelperspektive eines Visionssensors (1234) des Fahrzeugs oder
Darstellen aktueller oder vergangener oder beider Wahrnehmungsinformationen oder
Darstellen aktueller oder vergangener oder beider Bahnen oder
Darstellen aktueller oder vergangener oder beider Bewegungsplanungsinformationen oder
Darstellen eines Systemdiagramms des Fahrzeugs, wobei das Systemdiagramm eine oder mehrere Hardware-Komponenten oder einen oder mehrere Software-Prozesse oder beides umfasst.

8. Verfahren nach Anspruch 1, wobei die Informationen für das Eingreifen einen aktuellen Ort des Fahrzeugs, der durch die Person bestimmt wird, umfassen und das Eingreifen umfasst, den aktuellen Ort als vorheriges Wissen zu behandeln und einen Folgerungsalgorithmus zu verwenden, um den aktuellen Ort zu aktualisieren.

9. Verfahren nach Anspruch 1, wobei das Eingreifen darauf beruht, dass die Person einen Zielort (9342) des Fahrzeugs identifiziert, und das Eingreifen umfasst, den Zielort als vorheriges Wissen zu behandeln und einen Folgerungsalgorithmus zu verwenden, um den Zielort zu aktualisieren.

10. Verfahren nach Anspruch 1, wobei das Eingreifen umfasst, dass durch die Person eine Bahn gefunden wird, und das Eingreifen umfasst, die Bahn als vorheriges Wissen zu behandeln und einen Folgerungsalgorithmus zu verwenden, um die Bahn zu aktualisieren.

11. Verfahren nach Anspruch 1, wobei das Eingreifen umfasst, dass ein oder mehrere Bahnprobenpunkte durch die Person identifiziert werden, und das Eingreifen umfasst, eine Bahn oder ein Bahnsegment (1012, 1022, 1032, 1042) anhand des einen oder der mehreren Bahnprobenpunkte abzuleiten, und
wobei das Ableiten einer Bahn oder eines Bahnsegments auf einer oder mehreren Bahnprimitiven beruht oder
wobei das Eingreifen umfasst, zwei Bahnsegmente zu verketten.

12. Verfahren nach Anspruch 1, wobei das Eingreifen umfasst, ein oder mehrere nicht überquerbare Straßensegmente zu spezifizieren, oder
wobei das Eingreifen umfasst, ein Geschwindigkeitsprofil durch die Person einzustellen, und das Eingreifen umfasst, das Geschwindigkeitsprofil als vorheriges Wissen zu behandeln und einen Folgerungsalgorithmus zu verwenden, um das Geschwindigkeitsprofil zu aktualisieren, oder
wobei das Eingreifen umfasst, eine Hardware-Komponente oder einen Software-Prozess zu aktivieren, zu editieren oder zu deaktivieren, und wobei das Eingreifen umfasst, eine Unterkomponente einer Hardware-Komponente oder einen Verarbeitungsschritt eines Software-Prozesses zu aktivieren, zu editieren oder zu deaktivieren, oder
wobei das Eingreifen umfasst, eine Fahrtpräferenz oder eine Fahrtregel zu überschreiben, oder
wobei das Eingreifen umfasst, Daten zu editieren, wobei die Daten eines oder mehrere des Folgenden umfassen: eine Karte, Sensordaten in dem Fahrzeug oder einem zugehörigen AV-System (10, 200, 250, 481, 930), Bahndaten in dem Fahrzeug oder einem zugehörigen AV-System (10, 200, 250, 481, 930), Visionsdaten in dem Fahrzeug oder einem zugehörigen AV-System (10, 200, 250, 481, 930) oder jegliche vergangene Daten in dem Fahrzeug oder einem zugehörigen AV-System (10, 200, 250, 481, 930) .

13. Verfahren nach Anspruch 1, das umfasst, das Fahrzeug oder ein zugehöriges AV-System (10, 200, 250, 481, 930) anhand des Fernbetriebsbefehls (452) zu konfigurieren, wobei die Konfiguration umfasst, den Fernbetriebsbefehl (452) als vorheriges Wissen zu behandeln und einen Folgerungsalgorithmus zu verwenden, um den Fernbetriebsbefehl (452) zu aktualisieren.

14. Verfahren nach Anspruch 1, wobei der anomale Zustand eine Fehlfunktion einer mechanischen Komponente des Fahrzeugs, eine Blockierung eines Sichtfelds eines Visionssensors des Fahrzeugs oder eine Bewegung des Fahrzeugs, die nicht mit einer erwarteten Bewegung des Fahrzeugs übereinstimmt, umfasst.

15. System, das einen oder mehrere Prozessoren umfasst, die ausgelegt sind, das Verfahren nach einem des Anspruchs 1 bis 14 auszuführen.

## Revendications

1. Procédé mis en œuvre par ordinateur comprenant les étapes suivantes :
déterminer qu'une intervention dans la mise en œuvre d'une ou plusieurs capacités de conduite autonome d'un véhicule est appropriée, où la détermination que l'intervention est appropriée comprend la détermination qu'un ou plusieurs composants du véhicule sont dans une condition anormale ;
sur la base de la détermination, permettre à une personne de fournir des informations pour une intervention ;
demander une commande de téléopération concernant le fonctionnement du véhicule ;
avant la réception de la commande de téléopération, configurer le véhicule pour exécuter une mise en œuvre de substitution (307) des capacités de conduite autonome ;
recevoir la commande de téléopération (452) exprimée en langage naturel ;
convertir la commande de téléopération (452) en instructions machine pour les une ou plusieurs capacités de conduite autonome du véhicule ; et
provoquer l'intervention dans la mise en œuvre des une ou plusieurs capacités de conduite autonome du véhicule.

2. Procédé selon la revendication 1, dans lequel déterminer que l'intervention est appropriée comprend de recevoir des informations sur un état ou un environnement du véhicule ou d'un système de véhicule autonome, AV, associé (10, 200, 250, 481, 930),
où l'état ou l'environnement du véhicule comprend une fonctionnalité d'un composant matériel ou d'un logiciel du véhicule ou du système AV (10, 200, 250, 481, 930), et
où les informations concernant l'état ou l'environnement du véhicule ou du système AV (10, 200, 250, 481, 930) comprennent un signal provenant d'un composant matériel ou d'un logiciel du véhicule ou du système AV (10, 200, 250, 481, 930).

3. Procédé selon la revendication 2, dans lequel déterminer qu'une intervention est appropriée comprend d'analyser le signal pour détecter la présence de données inattendues ou l'absence de données attendues, et où l'analyse du signal comprend les étapes suivantes :
évaluer une inadéquation entre une quantité mesurée et une quantité estimée par un motif pour le composant matériel ou le logiciel, ou
utiliser la reconnaissance de motif pour évaluer un motif anormal dans le signal, où lequel le motif anormal est appris par un algorithme d'apprentissage automatique.

4. Procédé selon la revendication 1, comprenant, sur la base de la détermination, de provoquer l'intervention de substitution dans la mise en œuvre des une ou plusieurs capacités de conduite autonome du véhicule, et où l'intervention de substitution comprend les étapes suivantes :
faire en sorte que le véhicule ou un système AV associé (10, 200, 250, 481, 930) entre dans un mode de conduite entièrement autonome, un mode de conduite semi-autonome, ou un mode de conduite entièrement manuel, ou
faire en sorte que le véhicule fonctionne à une vitesse réduite, ou
identifier un emplacement d'arrêt sûr, et où l'intervention de substitution comprend la génération d'une nouvelle trajectoire vers l'emplacement d'arrêt sûr, ou
appeler un composant matériel de secours ou un processus logiciel de secours, ou
évaluer un composant matériel fonctionnel ou un processus logiciel fonctionnel requis pour faire fonctionner le véhicule.

5. Procédé selon la revendication 1, dans lequel déterminer qu'une intervention est appropriée comprend d'évaluer un ou plusieurs événements actifs associés au véhicule ou à un système AV associé, ou associés à l'environnement du véhicule ou d'un système AV associé (10, 200, 250, 481, 930), et où l'évaluation d'un ou plusieurs événements comprend de fusionner deux, ou davantage, événements actifs.

6. Procédé selon la revendication 1, dans lequel permettre à la personne de fournir des informations pour une intervention comprend de maintenir une file d'attente (451) sur la base d'une ou plusieurs déterminations qu'une intervention est appropriée, et où le maintien de la file d'attente (451) comprend de prioriser une intervention sur la base d'un ou plusieurs des éléments suivants : un arbre de décision, une optimisation combinatoire, un algorithme de machine, et une intervention passée.

7. Procédé selon la revendication 1, dans lequel permettre à la personne de fournir des informations pour une intervention comprend de présenter une interface interactive (212, 460, 610, 650, 710, 750, 810, 850, 910, 950, 1100, 1200), et où la présentation d'une interface interactive comprend la présentation d'un champ de vision ou d'une vue en plongée d'un capteur de vision (1234) du véhicule, ou
la présentation d'informations de perception courantes ou passées, ou des deux, ou
la présentation de trajectoires courantes ou passées, ou des deux, ou
la présentation d'informations de planification de mouvement courantes ou passées, ou des deux, ou
la présentation d'un diagramme de système du véhicule, le diagramme de système comprenant un ou plusieurs composants matériels, ou un ou plusieurs processus logiciels, ou les deux.

8. Procédé selon la revendication 1, dans lequel les informations pour l'intervention comprennent un emplacement courant du véhicule déterminé par la personne, et l'intervention comprend de traiter l'emplacement courant en tant que connaissance préalable et d'utiliser un algorithme d'inférence pour mettre à jour l'emplacement courant.

9. Procédé selon la revendication 1, dans lequel l'intervention est basée sur l'identification par la personne d'un emplacement du but (932) du véhicule, et l'intervention comprend de traiter l'emplacement du but en tant que connaissance préalable et d'utiliser un algorithme d'inférence pour mettre à jour l'emplacement du but.

10. Procédé selon la revendication 1, dans lequel l'intervention comprend une trajectoire à trouver par la personne, et l'intervention comprend de traiter la trajectoire en tant que connaissance préalable et d'utiliser un algorithme d'inférence pour mettre à jour la trajectoire.

11. Procédé selon la revendication 1, dans lequel l'intervention comprend un ou plusieurs points d'échantillonnage de trajectoire identifiés par la personne, et l'intervention comprend d'inférer sur une trajectoire ou un segment de trajectoire (1012, 1022, 1032, 1042) sur la base des un ou plusieurs points d'échantillonnage de trajectoire, et
où l'inférence sur une trajectoire ou un segment de trajectoire est basée sur une ou plusieurs primitives de trajectoire, ou
où l'intervention comprend la concaténation de deux segments de trajectoire.

12. Procédé selon la revendication 1, dans lequel l'intervention comprend la spécification d'un ou de plusieurs segments de route non praticables, ou
dans lequel l'intervention comprend la définition d'un profil de vitesse par la personne, et l'intervention comprend le traitement du profil de vitesse en tant que connaissance préalable et l'utilisation d'un algorithme d'inférence pour mettre à jour le profil de vitesse, ou dans lequel l'intervention comprend l'activation, la modification ou la désactivation d'un composant matériel ou d'un processus logiciel, et où l'intervention comprend l'activation, la modification ou la désactivation d'un sous-composant d'un composant matériel ou d'une étape de traitement d'un processus logiciel, ou
dans lequel l'intervention comprend l'écrasement d'une préférence de voyage ou d'une règle de voyage, ou
dans lequel l'intervention comprend l'édition de données, les données comprenant un ou plusieurs des éléments suivants : une carte, des données de capteur dans le véhicule ou un système AV associé (10, 200, 250, 481, 930), des données de trajectoire dans le véhicule ou un système AV associé (10, 200, 250, 481, 930), des données de vision dans le véhicule ou un système AV associé (10, 200, 250, 481, 930), ou toute donnée passée dans le véhicule ou un système AV associé (10, 200, 250, 481, 930) .

13. Procédé selon la revendication 1, comprenant la configuration du véhicule ou d'un système AV associé (10, 200, 250, 481, 930) sur la base de la commande de téléopération (452), la configuration comprenant le traitement de la commande de téléopération (452) en tant que connaissance préalable et l'utilisation d'un algorithme d'inférence pour mettre à jour la commande de téléopération (452).

14. Procédé selon la revendication 1, dans lequel la condition anormale comprend un dysfonctionnement d'un composant mécanique du véhicule, un blocage d'un champ de vision d'un capteur de vision du véhicule, ou un mouvement du véhicule qui ne correspond pas à un mouvement attendu du véhicule.

15. Système comprenant un ou plusieurs processeurs configurés pour exécuter le procédé de l'une quelconque des revendications 1 à 14.
